# EUROPEAN PATENT APPLICATION

(11) **EP 4 694 363 A1**
(43) Date of publication of application: **11.02.2026**
(21) Application number: 23929168.5
(22) Date of filing: 28.03.2023
(51) Int. Cl.: H04W 52/02

(54) **WIRELESS COMMUNICATION METHODS, NETWORK DEVICES AND TERMINAL DEVICES**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); HE, Chuanfeng, Dongguan, Guangdong 523860 (CN); XU, Weijie, Dongguan, Guangdong 523860 (CN); ZUO, Zhisong, Dongguan, Guangdong 523860 (CN)
(74) Representative: Mewburn Ellis LLP
(86) International application number: PCT/CN2023/084351
(87) International publication number: WO 2024/197568

(57) **Abstract**

Wireless communication methods, network devices and terminal devices. A wireless communication method comprises: a network device sending a first target signal, wherein the first target signal comprises K first signals, and the first signals are used for waking up a main receiver of a terminal device, or the first target signal is used for waking up the main receiver of the terminal device, K being a positive integer.

## Description

### TECHNICAL FIELD

Embodiments of the present disclosure relate to the field of communications, and in particular, to a wireless communication method, a network device, and a terminal device.

### BACKGROUND

In some scenarios, in order to further save power of the terminal, it is considered to introduce a low power wake up receiver (LP-WUR) for listening a low power wake up signal (Low Power Wake up signalling, LP-WUS), and in a case where the LP-WUS from a network device is received, a main receiver of the terminal device is woken up.

Due to characteristics such as the simple implementation, low device complexity, and low power working mode of the LP-WUR, the corresponding LP-WUS will also adopt simple coding and modulating modes, which easily results in a shorter coverage range of the LP-WUS signal, and affects the transmission performance of the LP-WUS.

Therefore, how to transmit the LP-WUS to improve the coverage range and transmission performance of the LP-WUS is an urgent problem to be solved.

### SUMMARY

The present disclosure provides a wireless communication method, a network device and a terminal device, which are conducive to improving the coverage range and transmission performance of an LP-WUS.

In a first aspect, a wireless communication method is provided, and includes: transmitting, by a network device, a first target signal, where the first target signal includes K first signals, and the first signal is used for waking up a main receiver of a terminal device, or the first target signal is used for waking up a main receiver of a terminal device, and K is a positive integer.

In a second aspect, a wireless communication method is provided, and includes: receiving, by a terminal device, part or all of signals in a first target signal transmitted from a network device, where the first target signal includes K first signals, and the first signal is used for waking up a main receiver of the terminal device, or the first target signal is used for waking up a main receiver of the terminal device, and K is a positive integer.

In a third aspect, a network device is provided, and is configured to perform the method in the above first aspect or its various implementations.

Specifically, the terminal device includes a functional module configured to perform the method in the above first aspect or its various implementations.

In a fourth aspect, a terminal device is provided, and is configured to perform the method in the above second aspect or its various implementations.

Specifically, the network device includes a functional module configured to perform the method in the above second aspect or its various implementations.

In a fifth aspect, a network device is provided, and includes a processor and a memory. The memory is configured to store a computer program, and the processor is configured to call and run the computer program stored in the memory to perform the method in the above first aspect or its various implementations.

In a sixth aspect, a terminal device is provided, and includes a processor and a memory. The memory is configured to store a computer program, and the processor is configured to call and run the computer program stored in the memory to perform the method in the above second aspect or its various implementations.

In a seventh aspect, a chip is provided, and is configured to implement the method in any one of the above first aspect to second aspect or their various implementations. Specifically, the chip includes: a processor, configured to call and run a computer program from a memory, to enable a device equipped with the apparatus to perform the method in any one of the above first aspect to second aspect or their various implementations.

In an eighth aspect, a computer-readable storage medium is provided, and is configured to store a computer program, and the computer program enables a computer to perform the method in any one of the above first aspect to second aspect or their various implementations.

In a ninth aspect, a computer program product is provided, and includes computer program instructions, and the computer program instructions enable a computer to perform the method in any one of the above first aspect to second aspect or their various implementations.

In a tenth aspect, a computer program is provided, and the computer program, when being executed on a computer, enables the computer to perform the method in any one of the above first aspect to second aspect or their various implementations.

Through the above technical solutions, the network device may transmit a wake up signal in a mode of aggregating K LP-WUSs, which is conducive to improving the coverage range and transmission performance of the wake up signal.

### BRIEF DESCRIPTION OF THE DRAWINGS

FIG. 1 is a schematic diagram of a communication system architecture provided in the embodiments of the present disclosure.
FIG. 2 is a schematic diagram of a zero power communication system according to an example of the present disclosure.
FIG. 3 is a schematic diagram of power harvesting according to an embodiment of the present disclosure.
FIG. 4 is a schematic diagram of a back scattering communication according to an embodiment of the present disclosure.
FIG. 5 is a circuit schematic diagram of a resistive load modulation according to an embodiment of the present disclosure.
FIG. 6 is a schematic diagram of a wireless communication method provided according to the embodiments of the present disclosure.
FIG. 7A to FIG. 11 are schematic diagrams of a distribution of LUP-WUSs provided in the embodiments of the present disclosure.
FIG. 12 to FIG. 15 are schematic diagrams of transmission occasions of LP-WUS groups provided in the embodiments of the present disclosure.
FIG. 16 is a schematic diagram of a cascading mode of a second target signal provided in the embodiments of the present disclosure.
FIG. 17 is a schematic diagram of symbol mapping between a second target signal and a first target signal provided in the embodiments of the present disclosure.
FIG. 18 is a schematic block diagram of a network device provided according to the embodiments of the present disclosure.
FIG. 19 is a schematic block diagram of a terminal device provided according to the embodiments of the present disclosure.
FIG. 20 is a schematic block diagram of a communication device provided according to the embodiments of the present disclosure.
FIG. 21 is a schematic block diagram of a chip provided according to the embodiments of the present disclosure.
FIG. 22 is a schematic block diagram of a communication system provided according to the embodiments of the present disclosure.

### DETAILED DESCRIPTION

Technical solutions in the embodiments of the present disclosure will be described below with reference to the drawings in the embodiments of the present disclosure, and it is obvious that, the described embodiments are a part of the embodiments of the present disclosure, rather than all of the embodiments. With respect to the embodiments in the present disclosure, all other embodiments obtained by those ordinary skilled in the art without making any creative work shall fall within the scope of protection of the present disclosure.

The technical solutions in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication networks (Non-Terrestrial Networks, NTN) system, a universal mobile telecommunications system (UMTS), wireless local area networks (WLAN), wireless fidelity (WiFi), a 5th-generation (5G) communication system, a cellular Internet of Things system, a cellular passive Internet of Things system or other communication systems, etc.

Generally speaking, traditional communication systems support a limited number of connections, which is also easy to implement. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present disclosure may be applied to these communication systems as well.

Optionally, the communication system in the embodiments of the present disclosure may be applied to a carrier aggregation (CA) scenario, a dual connectivity (DC) scenario, and may also be applied to a standalone (SA) network deployment scenario.

Optionally, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may be considered as an unshared spectrum.

In the embodiments of the present disclosure, each embodiment is described in conjunction with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

In the embodiments of the present disclosure, the network device may be a device for communicating with a mobile device. The network device may be an access point (AP) in WLAN, a base station (Base Transceiver Station, BTS) in GSM or CDMA, a base station (NodeB, NB) in WCDMA, an evolutional base station (Evolutional NodeB, eNB or eNodeB) in LTE, or a relay station or an access point, or a vehicle-mounted device, a wearable device, and a network device (gNB) in an NR network, or a network device in the cellular Internet of Things, or a network device in the cellular passive Internet of Things, or a network device in a future-evolved PLMN network, or a network device in an NTN network, or the like.

As an example but not a limitation, in the embodiments of the present disclosure, the network device may have mobile characteristics. For example, the network device may be a device which is mobile. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station deployed on land, water, or other places.

In the embodiments of the present disclosure, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with high speed.

The terminal device may be a station (STATION, ST) in the WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (Public Land Mobile Network, PLMN) network, a terminal device in the cellular Internet of Things, a terminal device in the cellular passive Internet of Things, or the like.

In the embodiments of the present disclosure, the terminal device may be deployed on land, including indoor or outdoor, handheld, wearable, or in-vehicle; the terminal device may also be deployed on water (e.g., on a steamship, etc.); the terminal device may also be deployed in air (e.g., on an airplane, on a balloon, or on a satellite, etc.).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present disclosure, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device is not only a hardware device, but also implements powerful functions by software support as well as data interaction or cloud interaction. Generalized wearable smart devices include devices, that are fully functional, large in size and may implement all or part of functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

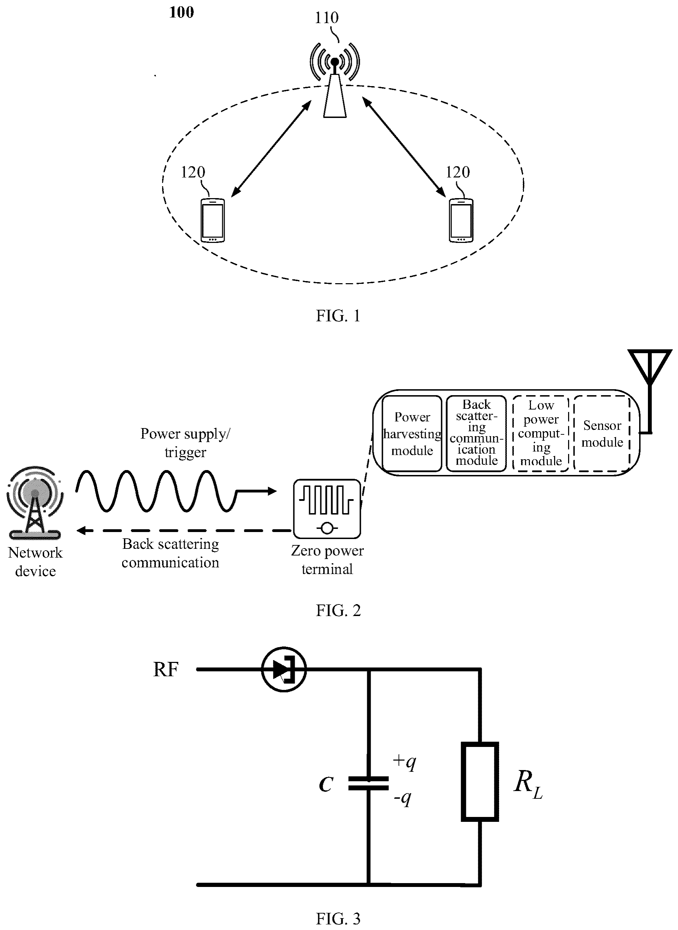

Exemplarily, a communication system 100 applied by the embodiments of the present disclosure is shown in FIG. 1. The communication system 100 may include a network device 110, and the network device 110 may be a device for communicating with terminal devices 120 (or referred to as communication terminals or terminals). The network device 110 may provide communication coverage for a specific geographical area and may communicate with terminal devices located within the coverage area.

FIG. 1 exemplarily shows a network device and two terminal devices, and optionally, the communication system 100 may include a plurality of network devices, another number of terminal devices may be included within a coverage range of each of the network devices, which is not limited in the embodiments of the present disclosure.

Optionally, the communication system 100 may further include other network entities such as a network controller, a mobility management entity, or the like, which are not limited in the embodiments of the present disclosure.

It should be understood that, in the embodiments of the present disclosure, a device with a communication function in the network/system may be referred to as a communication device. Taking the communication system 100 shown in FIG. 1 as an example, the communication device may include a network device 110 with a communication function and a terminal device 120 with a communication function. The network device 110 and the terminal device 120 may be the specific devices described above, which will not be repeated here. The communication device may further include other devices in the communication system 100, such as a network controller, a mobility management entity, and other network entities, which are not limited in the embodiments of the present disclosure.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

It should be understood that, "indicate / indicated / indicating / indication" mentioned in the embodiments of the present disclosure may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present disclosure, the term "correspond / corresponding / correspondence" may mean that there is a direct correspondence or an indirect correspondence between the two, or may mean that there is an association relationship between the two, or may mean a relationship of indicating and being indicated, or a relationship of configuring and being configured, or the like.

In the embodiments of the present disclosure, the "predefined" may be implemented by pre-saving corresponding codes, tables or other manners that may be used to indicate related information, in the device (for example, including the terminal device and the network device), and the present disclosure does not limit its specific implementation. For example, the predefined may refer to what is defined in a protocol.

In the embodiments of the present disclosure, the "protocol" may refer to standard protocols in the communication field, for example, may include an LTE protocol, an NR protocol, and related protocols applied in future communication systems, which are not limited to the present disclosure.

To facilitate the understanding of the technical solutions in the embodiments of the present disclosure, the relevant technologies of the present disclosure are explained.

### I. Zero power communication

Key technologies of the zero power communication include power harvesting, back scattering communication and a low-power consumption technology.

As shown in FIG. 2, a typical zero power communication system (e.g., a Radio Frequency Identification (RFID) system) includes a network device (e.g., a reader/writer of the RFID system) and a zero power device (e.g., an electronic tag). The network device is used to transmit a wireless power supply signal, a downlink communication signal to the zero power device, and receive a back scattering signal from the zero power device. A basic zero power device includes a power harvesting module, a back scattering communication module and a low-power consumption computing module. In addition, the zero power device may further have a memory or a sensor, for storing some basic information (such as an object identification) or sensor data such as ambient temperature and ambient humidity, etc.

For example, the power harvesting module may harvest power carried in radio waves in space (radio waves emitted by the network device as shown in FIG. 2), to drive the low-power consumption computing module of the zero power device and implement back scattering communication. After obtaining power, the zero power device may receive a control command from the network device, and transmit data to the network device based on the back scattering mode, based on the control signaling. The transmitted data may be data stored in the zero power device itself (such as an identity identification or pre-written information, such as production date, brand and manufacturer of the product, etc.). The zero power device may also be loaded with various types of sensors, thereby reporting data harvested by the various types of sensors, based on a zero power mechanism.

The key technologies in the zero power communication are described below.

### 1. Radio frequency power harvesting (RF Power Harvesting)

As shown in FIG. 3, a radio frequency power harvesting module implements the harvesting of spatial electromagnetic wave power based on an electromagnetic induction principle, and then obtains power required for driving the zero power device to work, such as driving a low-power consumption demodulation and modulation module, sensors, and memory reading, etc. Therefore, the zero power device does not need a traditional battery.

### 2. Back Scattering Communication

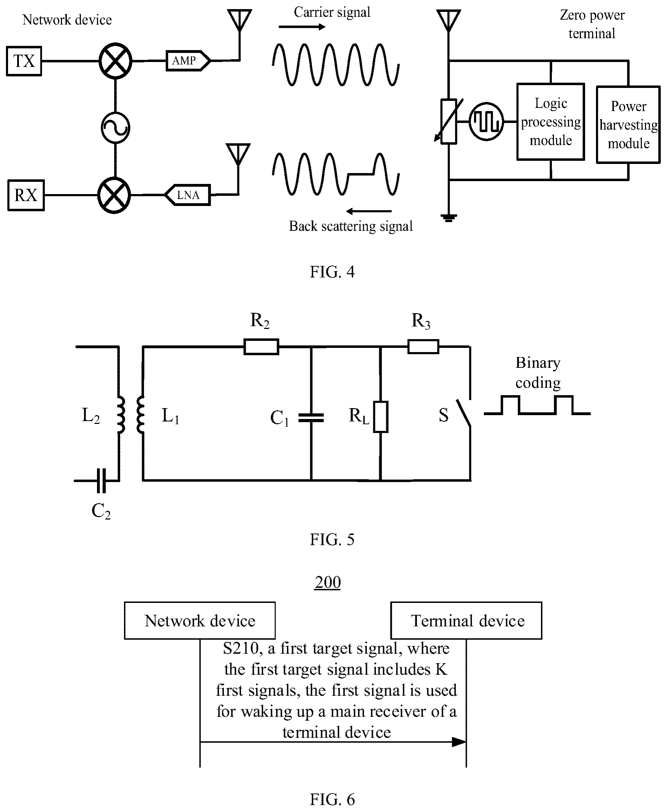

As shown in FIG. 4, the zero power device receives a carrier signal transmitted by the network device and modulates the carrier signal, loads information to be transmitted and radiates the modulated signal from an antenna (antennas). This information transmission process is called back scattering communication. Back scattering and load modulation functions are inseparable. The load modulation changes the magnitude of an impedance and other parameters of the zero power device, by adjusting and controlling an electrical parameter of an oscillation circuit of the zero power device according to the rhythm of a data stream, thereby completing the modulation process. The load modulation technology mainly includes two modes: resistive load modulation and capacitive load modulation. In the resistive load modulation, a resistor is connected in parallel with the load, and the resistor is turned on or off based on the control of a binary data stream, as shown in FIG. 5. The on and off of the resistor will cause the change of the circuit voltage, thereby implementing amplitude keying modulation (ASK). That is, the modulation and transmission of the signal are implemented by adjusting the magnitude of the amplitude of the back scattering signal of the zero power device. Similarly, in the capacitive load modulation, the change of the resonant frequency of the circuit may be implemented by the on and off of the capacitor, thereby implementing frequency keying modulation (Frequency Shift Keying, FSK). That is, the modulation and transmission of the signal are implemented by adjusting the working frequency of the back scattering signal of the zero power device.

It may be seen that the zero power device performs information modulation on an incoming wave signal by means of the load modulation mode, thereby implementing the back scattering communication process. Therefore, the zero power device has significant advantages:
(1) It does not actively transmit a signal, so it does not need a complex radio frequency link, such as a PA, a radio frequency filter, etc.
(2) It does not need to actively generate a high-frequency signal, so it does not need a high-frequency crystal oscillator.
(3) By means of the back scattering communication, the terminal's signal transmission does not need to consume the terminal's own power.

### 3. Coding technology

For the data transmitted by the zero power device, different forms of codes may be used to represent binary "1" and "0". The wireless radio frequency identification system usually uses one of the following coding methods: reverse non-return to zero (NRZ) coding, Manchester coding, unipolar return to zero coding, differential bi-phase (DBP) coding, differential coding, pulse interval coding (PIE), bi-phase space coding (FM0), Miller coding with differential coding, etc. In simple terms, different coding technologies use different pulse signals to represent 0 and 1.

In some scenarios, based on power sources and usage modes of zero power devices, the zero power devices may be divided into the following types.

### 1. Passive zero power device

The zero power device (such as the electronic tag in the RFID system) does not need an internal battery, and when the zero power device approaches the network device (such as the reader/writer in the RFID system), the zero power device is located within a near field range formed by antenna radiation of the network device. Therefore, the antenna of the zero power device generates an induced current through electromagnetic induction, and the induced current drives a low-power consumption chip circuit of the zero power device. Demodulation of a forward link signal, and modulation of a reverse link (or reflection link) signal and other works are implemented. For the back scattering link, the zero power device transmits a signal by the back scattering implementation.

It may be seen that the passive zero power device does not need an internal battery to drive both the forward link and the reverse link, and is a true zero power device.

The passive zero power device does not need the battery, the radio frequency circuit and the baseband circuit are very simple, and they do not need, for example, a low-noise amplifier (LNA), a power amplifier (PA), a crystal oscillator, analog-to-digital converters (Analog-to-Digital Converter, ADC) and other devices. Therefore, the passive zero power device has many advantages such as small size, light weight, very cheap price, and long service life, etc.

The passive zero power terminal may also support other power harvesting modes, and by performing power harvesting on ambient power (such as light power, thermal power, kinetic power, mechanical power, etc.), power for driving the circuit may be obtained, to support the communication of the terminal device.

### 2. Semi-passive zero power device

The semi-passive zero power device also is not equipped with a conventional battery itself, but may use an RF power harvesting module to harvest radio wave power, or use a power harvesting module to harvest the ambient power (such as solar power, thermal power, mechanical vibration power, etc.), and meanwhile, store the harvested power into a power storage unit (such as a capacitor). After obtaining the power, the power storage unit may drive a low-power consumption chip circuit of the zero power device. Demodulation of the forward link signal, and modulation of the reverse link signal and other works are implemented. For the back scattering link, the zero power device transmits a signal by the back scattering implementation. Alternatively, the zero power device may use a low power transmitter for actively transmitted communications, based on the harvested power.

It may be seen that the semi-passive zero power device does not need an internal battery to drive both the forward link and the reverse link. Although the power stored in the capacitor is used in the work, the power comes from the radio power harvested by the power harvesting module. Therefore, it is also a true zero power device.

The semi-passive zero power device inherits many advantages of the passive zero power device, so it has many advantages such as small size, light weight, very cheap price and long service life.

### 3. Active zero power device

The zero power device used in some scenarios may also be an active zero power device, and such a device may have an internal battery. The battery is used to drive a low-power consumption chip circuit of the zero power device. Demodulation of the forward link signal, and modulation of the reverse link signal and other works are implemented. However, for the back scattering link, the zero power device transmits a signal by the back scattering implementation. Therefore, the zero power of such a device is mainly reflected in the fact that the signal transmission of the reverse link does not need the terminal's own power, but uses the back scattering mode.

The active zero power terminal is equipped with an internal battery to supply power for an RFID chip, to increase a reading-writing distance of the active zero power terminal and improve the reliability of communications. Therefore, it may be applied in some scenarios with relatively high requirements on aspects such as the communication distance, reading latency, etc.

In some scenarios, zero power devices may be classified into the following types based on the type of transmitter.

### 1) Zero power device based on back scattering

This type of zero power device transmits uplink data by using the aforementioned back scattering mode. This type of zero power device does not have an active transmitter for the active transmission, but only have a transmitter for the back scattering. Therefore, when this type of zero power device transmits data, the network device needs to provide a carrier, and this type of zero power device performs back scattering based on the carrier, to implement the data transmission.

### 2) Zero power device based on an active transmitter

This type of zero power device uses an active transmitter with an active transmission capability for an uplink data transmission, therefore, when transmitting data, this type of zero power device may transmit the data by using its own active transmitter, without the need for the network device to provide a carrier. The active transmitter applicable for the zero power device may be, for example, an ultra-low power ASK, an ultra-low power FSK transmitters, etc., and when a 100uw signal is transmitted, the overall power consumption may be reduced to 400 to 600 µw.

### 3) Zero power device with both a back scattering transmitter and an active transmitter

This type of zero power device may support both a back scattering transmitter and an active transmitter. This type of zero power device may determine to use which signal transmission mode, that is, whether to use the active transmitter or the back scattering transmitter to transmit signals, according to different situations (such as an electric quantity condition, available ambient energy), or based on scheduling of the network device.

With the booming development of the Internet of Things, the existing Internet of Things communication technologies have been unable to meet the Internet of Things communication needs in many scenarios, as follows.

### 1. Harsh communication environment

Some Internet of Things scenarios may face extreme environments with high temperature, extremely low temperature, high humidity, high voltage, high radiation or high-speed movement, etc., such as an ultra-high voltage substation, high-speed train track monitoring, environment monitoring in a high-cold area, industrial production lines, etc. In these scenarios, existing IoT terminals will be unable to work due to the limitations of the working environment of traditional power supplies. In addition, the extreme working environments are not conducive to the maintenance for Internet of Things, such as replacement of the battery.

### 2. Demand for an extremely small size of terminal form

Some Internet of Things communication scenarios, such as the food traceability, commodity circulation, and smart wearable, require terminals to have an extremely small size to facilitate the use in these scenarios. For example, Internet of Things terminals used for commodity management in the circulation process usually use the form of electronic tags, which are embedded in the commodity packaging in a very small form. For another example, lightweight wearable devices may meet user needs while improving user experiences.

### 3. Extremely low-cost Internet of Things communication requirements

Numerous Internet of Things communication scenarios require the cost of Internet of Things terminals to be low enough, to improve their competitiveness with respect to other alternative technologies. For example, in logistics or warehousing scenarios, to facilitate the management of a large number of circulating goods, the Internet of Things terminal may be attached onto each goods, so that the accurate management of the entire process and entire cycle of the logistics may be completed through the communication between the terminal and the logistics network. These scenarios require the prices of Internet of Things terminals to be sufficiently competitive.

Therefore, to cover these unmet Internet of Things communication needs, in the cellular network, the Internet of Things with the ultra low cost, extremely small size, and free battery/free maintenance also needs to be developed, and the zero power Internet of Things may just meet these needs.

Zero power Internet of Things (IoT) may also be referred to as ambient power enabled Internet of Things (Ambient power enabled IoT, Ambient IoT or AMP IoT for short). The zero power device may also be referred to as an Ambient IoT device or an AMP IoT device. The ambient IoT device may refer to an IoT device that uses various ambient power, such as wireless radio frequency power, light power, solar power, thermal power, mechanical power, and other ambient power. This type of device may have no power storage capability, or may have a very limited power storage capability, such as using a capacitor with a capacity of tens of uF.

Ambient IoT may be used in at least four scenarios:
1. object recognition, such as logistics, production line product management, and supply chain management;
2. environmental monitoring, such as monitoring of temperature, humidity and harmful gas of the working environment and natural environment;
3. positioning, such as indoor positioning, intelligent object finding, production line goods positioning, etc.;
4. intelligent controlling, such as intelligent control of various electrical appliances in smart home (turning on and off air conditioners, adjusting temperature), and intelligent control of various facilities in agricultural greenhouses (automatic irrigation and fertilization).

### II. Cellular passive Internet of Things

With the increase in 5G industry applications, types of connected objects and application scenarios are increasing, and there also will be higher requirements on cost and power consumption of communication terminals. Applications of battery-free, low-cost passive internet of things devices become key technologies of the cellular internet of things, which enriches the types and number of 5G network-linked terminals, and truly implements the Internet of Everything. The passive internet of things device may be extended on its basis based on zero power communication technologies such as the RFID technology, so as to be applicable to the cellular internet of things.

To facilitate the understanding of the embodiments of the present disclosure, a power supply signal, a scheduling signal and a carrier signal related to the zero power communication are explained.

### 1. Power supply signal

The power supply signal is a power source for power harvesting by the zero power device.

In terms of carriers of the power supply signal, it may be a base station, a smart phone, a smart gateway, a charging station, a micro base station, or the like.

In terms of frequency bands, a frequency band of a radio wave used for power supply may be low frequency, intermediate frequency, high frequency, etc.

In terms of waveforms, the radio wave used for power supply may be a sine wave, a square wave, a triangle wave, a pulse, a rectangular wave, etc.

In addition, the power supply signal may be a continuous wave, or a discontinuous wave (i.e., interruption for a certain period of time is allowed).

Optionally, the power supply signal may be an existing signal in the 3rd generation partnership project (3GPP) standard, for example, a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), etc. Alternatively, it may be a WIFI signal or a blue tooth signal.

Optionally, the power supply signal may also be implemented by a newly added signal, such as a newly added signal dedicated to power supply.

### 2. Trigger signal or scheduling signal

The trigger signal is used to trigger or schedule the zero power device to transmit data.

In terms of carriers of the trigger signal, it may be a base station, a smart phone, a smart gateway, etc.

In terms of frequency bands, a radio wave used for triggering or scheduling may be low frequency, intermediate frequency, high frequency, etc.

In terms of waveforms, a radio wave used for triggering or scheduling may be a sine wave, a square wave, a triangle wave, a pulse, a rectangular wave, etc.

In addition, the trigger signal may be a continuous wave, or a discontinuous wave (i.e., interruption for a certain period of time is allowed).

Optionally, the trigger signal may be an existing signal in the 3GPP standard, for example, an SRS, a PUSCH, a PRACH, a PUCCH, a PDCCH, a PDSCH, a PBCH, or a WIFI signal or a blue tooth signal, etc.

Optionally, the trigger signal may also be implemented by a newly added signal, such as a newly added signal dedicated to triggering or scheduling.

### 3. Carrier signal

The carrier signal is used by the zero power device to generate a back scattering signal. For example, the zero power device may modulate the received carrier signal according to information to be transmitted, to form the back scattering signal.

In terms of carriers of the carrier signal, it may be a base station, a smart phone, a smart gateway, etc.

In terms of frequency bands, a radio wave used as the carrier signal may be low frequency, intermediate frequency, high frequency, etc.

In terms of waveforms, the radio wave used as the carrier signal may be a sine wave, a square wave, a triangle wave, a pulse, a rectangular wave, etc.

In addition, the carrier signal may be a continuous wave, or a discontinuous wave (i.e., interruption for a certain period of time is allowed).

Optionally, the carrier signal may be an existing signal in the 3GPP standard, for example, an SRS, a PUSCH, a PRACH, a PUCCH, a PDCCH, a PDSCH, a PBCH, or a WIFI signal or a blue tooth signal, etc.

Optionally, the carrier signal may also be implemented by a newly added signal, such as a newly added carrier signal dedicated to generating a back scattering signal.

It should be noted that in the embodiments of the present disclosure, the power supply signal, the scheduling signal and the carrier signal may be the same signal, or may also be different signals. For example, the power supply signal may be used as the carrier signal, and the scheduling signal may also be used as the carrier signal, etc.

In some scenarios, in order to reduce air interface signalling, quickly recover wireless connections and quickly recover data services, a new radio resource control (RRC) state is defined, that is RRC_INACTIVE state. This state is different from the RRC_IDLE state and RRC_ CONNECTED state.

In the RRC_IDLE state: mobility is reselection of cell selection based on the terminal device, paging is initiated by a core network (CN), and a paging area is configured by the CN. There is no a terminal device access stratum (AS) context or an RRC connection on the base station side.

In the RRC_CONNECTED state: there is an RRC connection, and there is the terminal device AS context at the base station and the terminal device. The network device knows that a position of the terminal device is at a specific cell level. Mobility is a mobility controlled by the network device. Unicast data may be transmitted between the terminal device and the base station.

In the RRC_INACTIVE state: mobility is reselection of cell selection based on the terminal device, there is a connection between the CN and the NR, there is the terminal device AS context at a certain base station, paging is triggered by a radio access network (RAN), the RAN-based paging area is managed by the RAN, and the network device knows that a position of the terminal device is at an RAN-based paging area level.

In some scenarios, in order to save power of the terminal, a discontinuous reception (DRX) mechanism is introduced, so that in a case where there is no data to be received, the terminal does not need to keep a receiver turned on all the time, but enters a discontinuous reception state, thereby achieving the purpose of saving power. Specifically, the network device may configure the terminal device to be woken up and to listen a physical downlink control channel (PDCCH) at the time of on duration, and to be sleeping at other times (that is, the terminal device does not need to listen the PDCCH).

In the evolution of the NR technology, higher requirements are placed on terminal power saving. For example, for the existing DRX mechanism, during each on duration, the UE needs to continuously detect the PDCCH to determine whether the base station schedules a data transmission transmitted to the UE. However, for most UEs, there may be no need to receive the data transmission for a long time, but they still need to be woken up regularly to listen a possible downlink transmission, and for such UEs, there is room for further optimizing the terminal power saving.

In some scenarios, in order to further reduce power consumption of the terminal in the RRC_CONNECTED state, a power saving signal (power saving signalling) is introduced, and the power saving signal is used in combination with the DRX mechanism, and the terminal receives an indication of the power saving signal before on duration. In a case where the terminal has a data transmission during the upcoming on duration, the network "wakes up" the terminal by the power saving signal to listen the PDCCH during the upcoming on duration; otherwise, the network indicates the terminal to keep "sleeping" by the power saving signal, and the terminal does not need to listen the PDCCH during the upcoming on duration. Compared with the existing DRX mechanism, in a case where the terminal does not have a data transmission, the terminal may omit the listening of the PDCCH during the on duration, thereby achieving the power saving of the terminal.

In some scenarios, the power consumption of the terminal in the RRC_IDLE state and RRC_INACTIVE state is mainly come from periodic discontinuous reception paging, which includes the power consumption of time-frequency synchronization recovery and automatic gain control (AGC) before a paging occasion arrives, and the power consumption of detecting a paging PDCCH during the paging occasion. In order to further save power of the terminal in the RRC_INACTIVE state and the RRC_IDLE state, the power saving signal for paging reception is introduced, referred to as a paging early indication (PEI), which is used to indicate whether the terminal needs to receive paging on the paging occasion, before the paging occasion of the terminal arrives.

In some scenarios, in order to further save power of the terminal, it is considered to introduce a low power wake up receiver (LP-WUR) to listening a low power wake up signal (Low Power Wake up signalling, LP-WUS), and in a case where the LP-WUS from the network device is received, the LP-WUR wakes up a main receiver (main radio, MR) of the terminal device.

Since the implementation of the LP-WUR is simple, the device has low complexity, and is in a low-power working mode, and a simple coding and modulating mode will also be used for the corresponding LP-WUS, this easily leads to a shorter coverage range of the LP-WUS signal, which is smaller than the coverage performance of the PDCCH and Physical Uplink Shared Channel (PUSCH) in a part of scenarios.

Therefore, how to transmit the LP-WUS to improve the coverage range and transmission performance of the LP-WUS is an urgent problem to be solved.

To facilitate the understanding of the technical solutions in the embodiments of the present disclosure, the technical solutions of the present disclosure are described in detail below through specific embodiments. The above related technologies, as optional solutions, may be arbitrarily combined with the technical solutions in the embodiments of the present disclosure, which all fall within the protection scope of the embodiments of the present disclosure. The embodiments of the present disclosure include at least a part of the following contents.

FIG. 6 is a schematic interaction diagram of a wireless communication method 200 according to the embodiments of the present disclosure. As shown in FIG. 6, the method 200 includes at least part of the following contents.

In S210, the network device transmits a first target signal, where the first target signal includes K first signals, and K is a positive integer, for example, K> 1.

Correspondingly, the terminal device receives part or all of the K first signals. For example, the terminal device performs listening on the first signal through an LP-WUR.

In the embodiments of the present disclosure, the terminal device has a main receiver and the LP-WUR, where the power consumption of the LP-WUR is lower than the power consumption of the main receiver.

In some embodiments, the first signal is used for waking up the main receiver of the terminal device. In this case, the first signal is referred to as an LP-WUS, a wake up signal, and the first target signal is referred to as an LP-WUS group.

In other embodiments, the first target signal is used for waking up the main receiver of the terminal device. In this case, the first target signal is also referred to as an LP-WUS or a wake up signal, and the first signal may be considered as a sub-signal of the LP-WUS.

In yet other embodiments, the first signal or the first target signal may also be a signal in the zero power communication scenario, such as a control signal, for example, a signal for paging, scheduling, triggering, communication control and other functions that is transmitted from the network device to the terminal, and it may also be processed and transmitted by adopting the transmitting mode of the embodiments of the present disclosure, which is not limited in the present disclosure.

It is taken as an example in which the first signal is an LP-WUS and the first target signal is an LP-WUS group, for explanations below, but the present disclosure is not limited thereto. In other scenarios, the names of the first signal and the first target signal may also be adaptively adjusted according to their functions.

In some embodiments, the network device transmits a first target signal, where the first target signal includes K first signals, which can be considered that the network device transmits the LP-WUS in a mode of aggregating K LP-WUSs. The aggregating of the K LP-WUSs is referred to as binding of the K LP-WUSs or K repetitions of the LP-WUS.

In some embodiments, the network device may be a base station in a cellular communication system (such as a gNB in an NR system), or may also be an AP in a WIFI system, etc., which is not limited in the present disclosure.

In some embodiments, the terminal device may be a terminal device in the cellular communication system (such as a UE in the NR system), or may also be a STA in the WIFI system, or may also be an ambient power enabled device (AMP device or Ambient device), etc., which is not limited in this application.

In the embodiments of the present disclosure, the ambient power enabled device is also referred to as an ambient power enabled Internet of Things device (AMP IoT device or Ambient IoT device), a zero power device, or a zero power terminal.

In some embodiments, the first target signal may be transmitted to a terminal device, or may be transmitted to a group of terminal devices, that is, the first target signal or the first signal is used for waking up a main receiver of a terminal device, or is used for waking up main receivers of a group of terminal devices.

In some embodiments, the K first signals are transmitted based on a first pattern (or structure).

Optionally, the first pattern may be pre-defined, or may be configured by the network device, such as dynamically configured, or semi-statically configured.

In some implementations, the network device may configure a specific pattern of the first pattern.

In other implementations, the network device may indicate an index of a target pattern among a plurality of patterns, where each pattern corresponds to an index, and the network device may indicate the index of the target pattern. Optionally, the plurality of patterns may be pre-defined, or pre-configured by the network device.

### Embodiment 1: design of the first target signal

The distribution of K LP-WUSs is described below by taking an example in which the first signal is an LP-WUS and the first target signal is an LP-WUS group, which is not limited in the present disclosure, and it may also be considered that the first target signal is an LP-WUS, then the first signal may be considered as a sub-signal of the LP-WUS, and the corresponding distribution of K first signals may be considered as the distribution of K sub-signals.

It should be understood that the distribution of the K first signals described below is only an example, which is not limited in the present disclosure, as long as the network device and the terminal device have a consistent understanding of the pattern of the K first signals, the present disclosure is not limited thereto.

### Embodiment 1-1: pattern design of K first signals

In some embodiments, the K first signals are transmitted via time-division multiplexing (TDM) and/or frequency-division multiplexing (frequency division multiplexing, FDM).

That is, the K first signals may be transmitted by using different time domain resources and/or frequency domain resources.

Case 1: K first signals are transmitted by using same frequency domain resources.

For example, center frequency points and bandwidths of the frequency domain resources used by the K first signals are all equal.

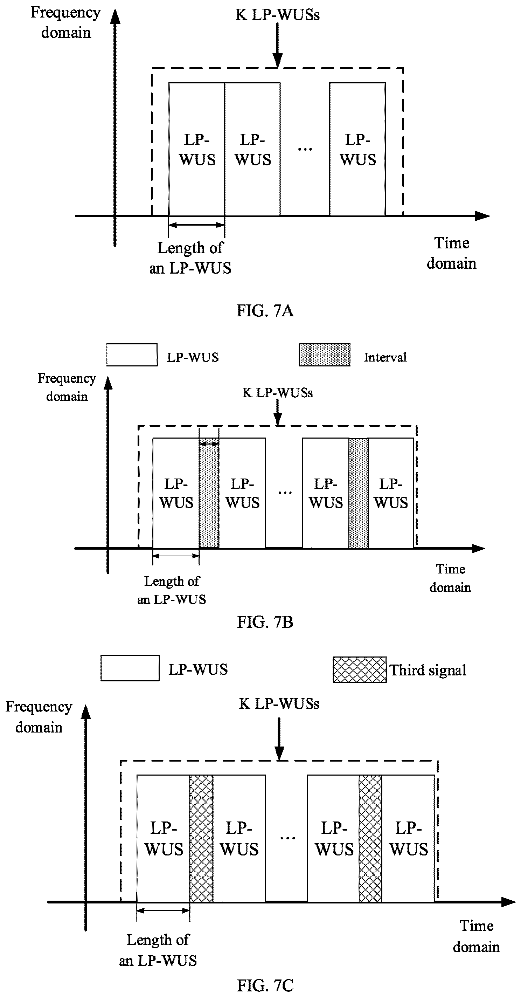

As an example, as shown in FIG. 7A to FIG. 7C, the K first signals use the same frequency domain resources.

In some embodiments, the K first signals are transmitted continuously in the time domain. In other words, the time domain resources of the K first signals are continuous. As an example, as shown in FIG. 7A, FIG. 8A, and FIG. 9A, K first signals are transmitted continuously.

In other embodiments, the K first signals may also be discontinuous in the time domain. In other words, the time domain resources of the K first signals are discontinuous. As an example, as shown in FIG. 7B, FIG. 7C, FIG. 8B, FIG. 8C, FIG. 9B, and FIG. 9C, there is a time interval (denoted as T0) between the K first signals in the time domain.

Optionally, the time interval T0 may be pre-defined, or configured by the network device, such as dynamically configured, or semi-statically configured. For example, the network device may configure a specific value of the time interval T0. For another example, the network device may indicate an index of a target time interval among a plurality of time intervals, where each time interval corresponds to an index, and the network device may indicate the index of the target time interval. Optionally, the plurality of time intervals may be pre-defined, or pre-configured by the network device.

In some implementations, time intervals between two adjacent first signals among the K first signals may be equal.

In other implementations, time intervals between two adjacent first signals among the K first signals may be unequal.

In some embodiments, no signal is transmitted between adjacent first signals.

As an example, as shown in FIG. 7B, FIG. 8B, and FIG. 9B, no signal is transmitted between adjacent first signals.

In other embodiments, a signal may also be transmitted between adjacent first signals.

As an example, as shown in FIG. 7C, FIG. 8C, and FIG. 9C, there are third signals between the K first signals.

Optionally, the third signal may be used only to separate adjacent first signals, without carrying information, or the third signal may also be used to carry information, such as synchronization information (e.g., as a synchronization beacon) or index information of the first signal. Optionally, in a case where the third signal is used as a synchronization signal, it may be considered that the third signal does not carry information.

In the embodiments of the present disclosure, for the convenience of distinguishing and explanation, a bandwidth of a first signal is referred to as an LP-WUS bandwidth, a total bandwidth occupied by K first signals is referred to as an LP-WUS group bandwidth or a bandwidth of the first target signal, and a duration of a first signal in the time domain is referred to as an LP-WUS length (duration).

In some embodiments, the bandwidth of the third signal is the same as the bandwidth of the first signal, that is, the bandwidth of the third signal is equal to the LP-WUS bandwidth, as shown in FIG. 7C, FIG. 8C and FIG. 9C.

For example, the network device may transmit the third signal after each first signal by using the same frequency domain resources, or transmit the third signal before each first signal by using frequency domain resources of a previous first signal, or transmit the third signal before each first signal by using frequency domain resources of the first signal, or transmit the third signal by using fixed frequency domain resources, such as frequency domain resources of an X-th first signal, or pre-defined frequency domain resources, or frequency domain resources configured by the network device.

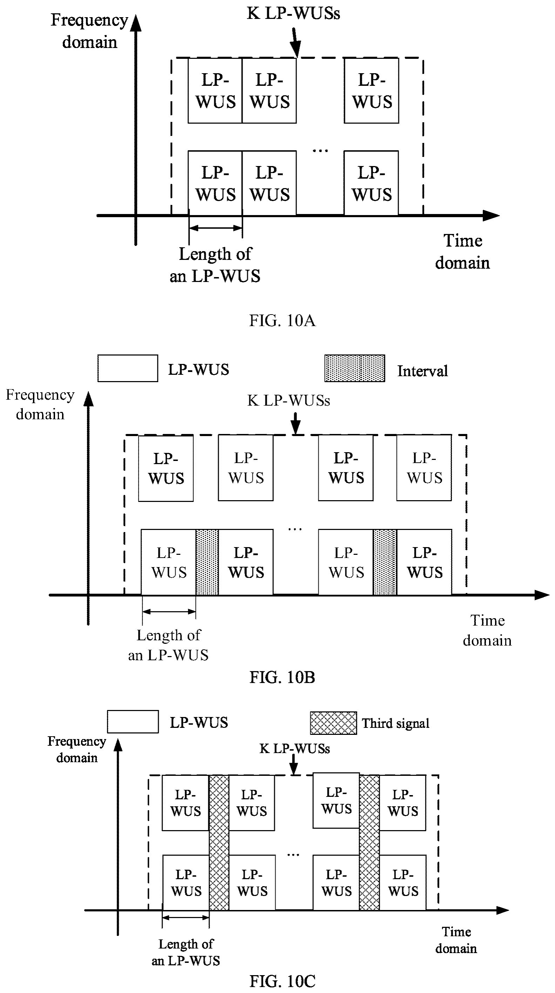

In some embodiments, the bandwidth of the third signal is greater than the bandwidth of the first signal, for example, the bandwidth of the third signal is equal to the bandwidth of K first signals, that is, the bandwidth of the third signal is equal to the LP-WUS group bandwidth, as shown in FIG. 10C.

In some embodiments, the duration of a first signal in the time domain (i.e., an LP-WUS duration) may be equal to a time interval between adjacent first signals, or may be less than a time interval between two adjacent first signals.

Case 2: K first signals are transmitted by using different frequency domain resources.

For example, at least two first signals among the K first signals are transmitted by using different frequency domain resources.

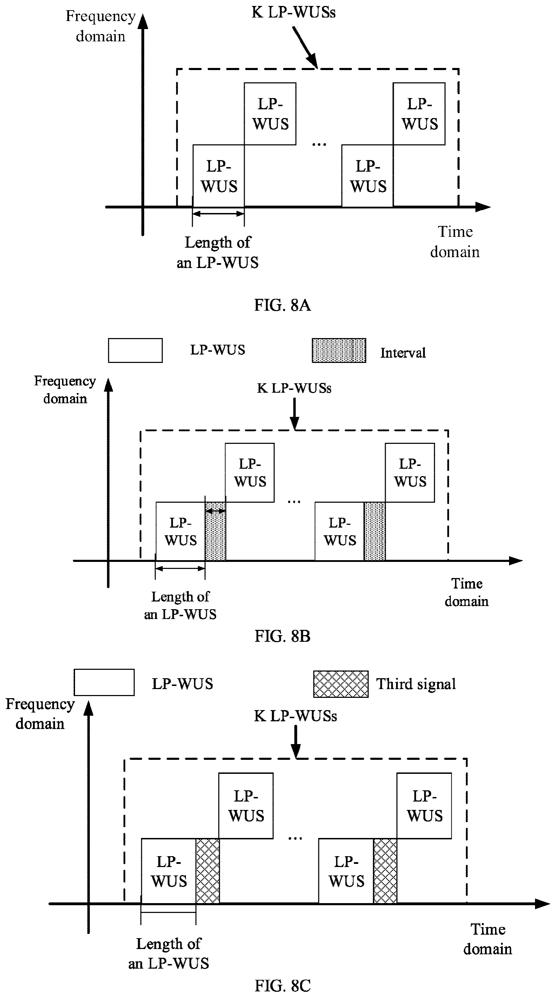

As an example, as shown in FIG. 8A to FIG. 10C, at least two first signals among the K first signals are transmitted by using different frequency domain resources.

In some embodiments, the different frequency domain resources may be adjacent frequency domain resources, that is, there is no frequency domain interval between the frequency domain resources, for example, as shown in FIG. 8A to FIG. 8C. Transmissions of the K first signals in the time domain may refer to the design of time domain transmissions of the K first signals over the same frequency domain resources in Case 1, which will not be repeated here for the sake of brevity.

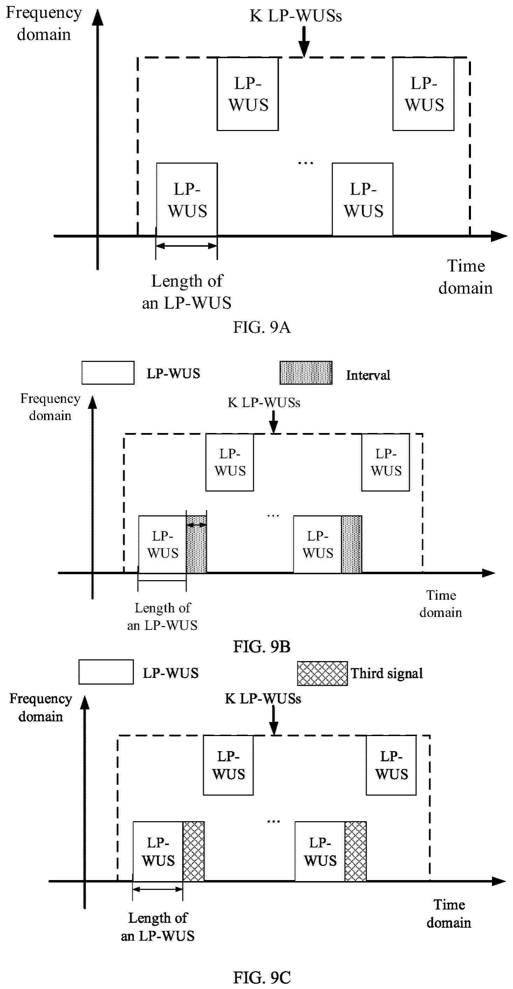

In other embodiments, there may be a frequency domain interval between the different frequency domain resources, such as shown in FIG. 9A to FIG. 9C. Transmissions of the K first signals in the time domain may refer to the design of time domain transmissions of the K first signals over the same frequency domain resources in Case 1, which will not be repeated here for the sake of brevity.

Optionally, the frequency domain interval is pre-defined, or configured by the network device, such as dynamically configured or semi-statically configured.

In some implementations, the network device may configure a specific value of the frequency domain interval.

In other implementations, the network device may indicate an index of a target frequency domain interval among a plurality of frequency domain intervals, where each frequency domain interval corresponds to an index, and the network device may indicate the index of the target frequency domain interval. Optionally, the plurality of frequency domain intervals may be pre-defined, or pre-configured by the network device.

In some embodiments, two adjacent first signals among the K first signals are transmitted by using different frequency domain resources, or at least partially two adjacent first signals among the K first signals are transmitted by using different frequency domain resources.

For example, each time when the first signal is transmitted, the frequency domain resources are switched, as shown in FIG. 8A to FIG. 9C. Alternatively, there may be two adjacent first signals using the same frequency domain resources, and the K first signals are transmitted by using greater than or equal to 2 frequency domain resources, for example, as shown in FIG. 10A to FIG. 10C. Taking four first signals as an example, the frequency domain resources used by the four first signals are in sequence: frequency domain resource 1, frequency domain resource 2, frequency domain resource 2, and frequency domain resource 1, and in a case where a first one of the first signals and a second one of the first signals are transmitted, the network device switches the frequency domain resources, and in a case where a second one of the first signals and a third one of the first signals are transmitted, the network device does not switch the frequency domain resources, and in a case where a third one of the first signals and a fourth one of the first signals are transmitted, the network device switches the frequency domain resources.

In some embodiments, M first signals among the K first signals are transmitted on the same time domain resources, and the M first signals are transmitted based on different frequency domain resources.

That is, in a case where M first signals are transmitted on the same time domain resources, the M first signals may be transmitted based on different frequency domain resources.

In some embodiments, the K first signals may be transmitted via frequency-division multiplexing only, that is, the K first signals are transmitted by using K different frequency domain resources, and using the same time domain resources in the time domain, that is, only one LP-WUS duration is occupied in the time domain. The K different frequency domain resources may be adjacent, or have a frequency domain interval therebetween, and a signal may be transmitted or may not be transmitted at the frequency domain interval. For the specific implementations, refer to the related implementations of the time domain design of the K first signals over the same frequency domain resources, which will not be repeated here for the sake of brevity.

In some embodiments, there is only one first signal on a time domain resource. In this case, the K first signals are transmitted via time-division only, or via time-division and frequency-division, as shown in FIG. 7A to FIG. 9C.

In other embodiments, there may be a plurality of first signals on a time domain resource. In this case, the K first signals may be transmitted via frequency-division only, or via time-division and frequency-division, as shown in FIG. 10A to FIG. 10C.

It should be understood that in the embodiments of the present disclosure, on the time domain resources occupied by the K first signals, there may be a first signal on a time domain resource, or there may be a plurality of first signals on a time domain resource, or there may be a first signal on some time domain resources and a plurality of first signals on other time domain resources, and the present disclosure does not limit the specific distribution pattern.

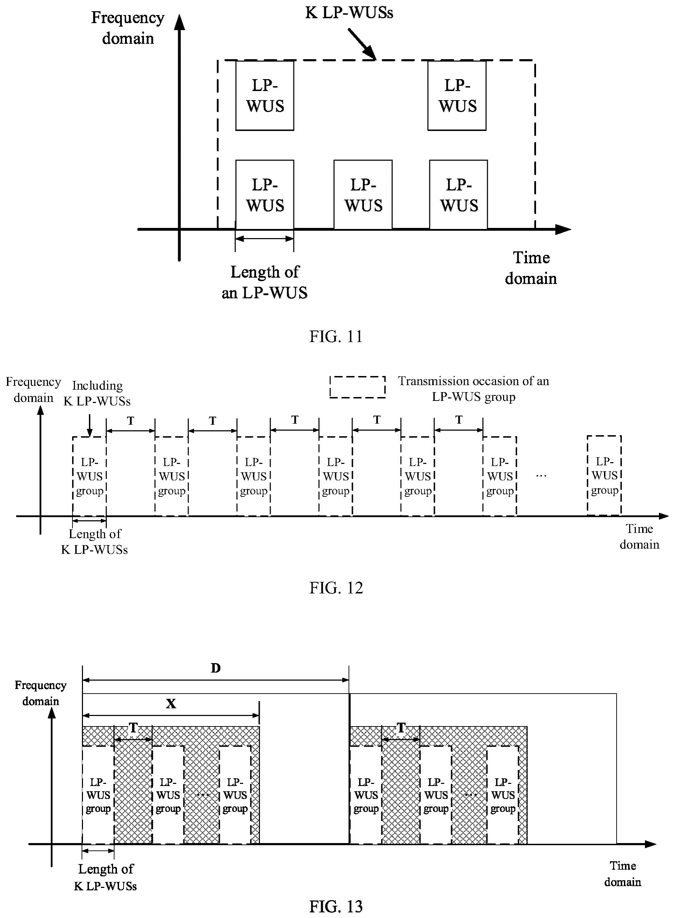

As shown in FIG. 11, in the structure or pattern of K first signals, a plurality of first signals are transmitted on a part of time domain resources, and only one first signal is transmitted on another part of time domain resources.

### Embodiment 1-2: transmission design of the first target signal

In some embodiments, the first target signal is transmitted periodically.

In some specific embodiments, transmission occasions of the first target signal are periodically distributed in the time domain.

FIG. 12 shows a schematic diagram of periodically distributed transmission occasions of the first target signal, and as shown in FIG. 12, the transmission occasions of the first target signal may be periodically distributed with an interval of T, where T may be an interval between an ending position of a transmission occasion of a previous first target signal and a starting position of a transmission occasion of a next first target signal.

In some embodiments, a period of the transmission occasions of the first target signal may be pre-defined, or configured by the network device, such as dynamically configured or semi-statically configured. For example, the network device may configure a specific value of the period. For another example, the network device may indicate an index of a target period among a plurality of candidate periods, where each candidate period corresponds to an index, and the network device may indicate the index of the target period. Optionally, the plurality of candidate periods may be pre-defined, or pre-configured by the network device.

In other specific embodiments, time domain resources on which the transmission occasions of the first target signal are located are periodically distributed, where one or more transmission occasions of the first target signal are distributed on the time domain resources within a period.

As an example, the time domain resources on which the transmission occasions of the first target signal are located is shown in FIG. 13, and the period of the time domain resources is D, and within the period D, a length of time domain resources occupied by the transmission occasions of the first target signal is X, where X<=D, and one or more transmission occasions of the first target signal are periodically distributed within the time domain resources of the length X.

Optionally, the period D of the time domain resources may be pre-defined, or configured by the network device, such as dynamically configured or semi-statically configured. For example, the network device may configure a specific value of the period D. For another example, the network device may indicate an index of a target period among a plurality of candidate periods, where each candidate period corresponds to an index, and the network device may indicate the index of the target period. Optionally, the plurality of candidate periods may be pre-defined, or pre-configured by the network device.

Optionally, the length X of the time domain resources may be pre-defined, or configured by the network device, such as dynamically configured or semi-statically configured. For example, the network device may configure a specific value of the length X. For another example, the network device may indicate an index of a target length among a plurality of candidate lengths, where each candidate length corresponds to an index, and the network device may indicate the index of the target length. Optionally, the plurality of candidate lengths may be pre-defined, or pre-configured by the network device.

Optionally, there is a time interval T between transmission occasions of two adjacent first signal, and the time interval T may be pre-defined, or configured by the network device, such as dynamically configured or semi-statically configured. For example, the network device may configure a specific value of the time interval T. For another example, the network device may indicate an index of a target time interval of a plurality of candidate time intervals, where each candidate time interval corresponds to an index, and the network device may indicate the index of the target time interval. Optionally, the plurality of candidate time intervals may be pre-defined, or pre-configured by the network device.

Optionally, a starting position of the time domain resources occupied by the transmission occasions of the first target signal may be aligned with a starting position of a period D, or may have a certain time offset with a starting position of a period D. Optionally, the time offset may be pre-defined or configured by the network device, such as dynamically configured or semi-statically configured. For example, the network device may configure a specific value of the time offset. For another example, the network device may indicate an index of a target time offset of a plurality of candidate time offsets, where each candidate time offset corresponds to an index, and the network device may indicate the index of the target time offset. Optionally, the plurality of candidate time offsets may be pre-defined, or pre-configured by the network device.

In other embodiments, the first target signal is transmitted based on an event trigger.

For example, in a case where data arrives at the network device, the network device may transmit the first target signal.

In some embodiments, an event is used for triggering a transmission of the first target signal, or is used for triggering a plurality of transmissions of the first target signal.

In some specific embodiments, an event may be used for triggering a time domain resource window, and within the time domain resource window, there are a plurality of transmission occasions of the first target signal, and optionally, the plurality of transmission occasions are periodically distributed.

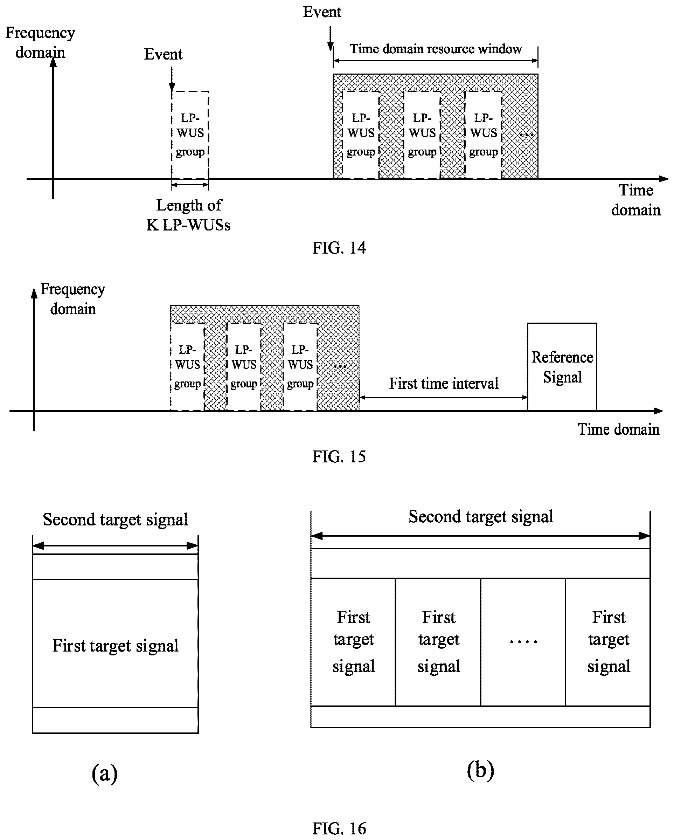

As shown in FIG. 14, an event may be used for triggering a transmission of the first target signal, or may be used for triggering a time domain resource window, and within the time domain resource window, there are a plurality of transmission occasions of the first target signal. Optionally, the plurality of transmission occasions of the first target signal are periodically distributed.

In some embodiments, the transmission occasion of the first target signal is determined based on a reference signal.

Optionally, the reference signal may be a paging signal, or may be other downlink signals, such as a synchronization signal.

In some embodiments, the transmission occasion of the first target signal is determined based on a time domain position of the reference signal and a first time interval.

As an example, an interval between the transmission occasion of the first target signal and the time domain position of the reference signal is greater than or equal to the first time interval. Optionally, the interval here may be a time interval between an ending position of the transmission occasion of the first target signal and a starting position of the reference signal, or may be a time interval between a starting position of the transmission occasion of the first target signal and a starting position of the reference signal, etc., which is not limited in the present disclosure.

As another example, the time domain position of the reference signal and the first time interval are used for determining a plurality of transmission occasions of the first target signal.

In some specific implementations, the time domain position of the reference signal and the first time interval are used for determining a time domain resource window, and within the time domain resource window, a plurality of transmission occasions of the first target signal are distributed, and optionally, the plurality of transmission occasions of the first target signal are periodically distributed.

As shown in FIG. 15, the time domain position of the reference signal and the first time interval are used for determining a time domain resource window, and within the time domain resource window, a plurality of transmission occasions of the first target signal are distributed.

In some embodiments, the first time interval may be pre-defined, or configured by the network device, such as dynamically configured or semi-statically configured. For example, the network device may configure a specific value of the first time interval. For another example, the network device may indicate an index of a target time interval of a plurality of candidate time intervals, where each candidate time interval corresponds to an index, and the network device may indicate the index of the target time interval. Optionally, the plurality of candidate time intervals may be pre-defined, or pre-configured by the network device.

### Embodiment 2: Reception processing of the first target signal by the terminal device

In some embodiments, factors affecting the reception performance of the terminal device for the LP-WUS may include but are not limited to at least one of:
a coverage capability (e.g., a coverage range) of the LP-WUS, a capability or a type of the terminal device, or a receiving mode used by the terminal device.

Optionally, the coverage capability of the LP-WUS may include signal strength of the LP-WUS.

For example, the signal strength of the LP-WUS includes but is not limited to at least one of:
reference signal receiving power (RSRP), a reference signal receiving quality (RSRQ), a signal to interference plus noise ratio (SINR), or a received signal strength indication (RSSI).

For the LP-WUS with different coverage capabilities, the reception performance of the LP-WUS on the terminal device side is also different, and therefore, the terminal device may adopt a suitable receiving mode to receive the LP-WUS based on the coverage capability of the LP-WUS, to ensure the reception performance of the LP-WUS.

For example, for an LP-WUS with higher RSRP, the terminal device may receive the LP-WUS once, and for an LP-WUS with lower RSRP, the terminal device may receive the LP-WUS for multiple times and process the received LP-WUSs in combination.

In some embodiments, the communication system may have a variety of terminal devices with different capabilities or types, and the capabilities or types may be classified according to the implementations of the LP-WUR. For example, the implementation of the LP-WUR of terminal devices with different capabilities or types is different, and for example, LP-WURs of some terminal devices support listening an LP-WUS for demodulating, decoding and other reception processing, while LP-WURs of some terminal devices may support listening a plurality of LP-WUSs for combined reception processing, thereby improving the coverage range and transmission performance of the LP-WUS.

For example, terminal devices with different capabilities or types have different reception performances for the LP-WUS, and therefore, a suitable receiving mode may be used to receive the LP-WUS, based on the capability or type of the terminal device, to ensure the reception performance of the LP-WUS.

In some specific embodiments, there are terminal devices with at least two capabilities or types, and for example, terminal devices with a first capability (or, a first type) and a second capability (or, a second type), where the LP-WUR of the terminal device with the first capability is a first-type LP-WUR, and the LP-WUR of the terminal device with the second capability is a second-type LP-WUR; and the power consumption of the first-type LP-WUR is lower than the power consumption of the second-type LP-WUR, and/or the first-type LP-WUR supports receiving an LP-WUS only, and the second-type LP-WUR supports receiving a plurality of LP-WUSs.

Optionally, the first-type LP-WUR only needs to receive an LP-WUS in the LP-WUS group to complete the solution; then the terminal device with the first capability may receive a first LP-WUS in the LP-WUS group. The first LP-WUS may be any LP-WUS in the LP-WUS group, or may be determined according to a pre-defined rule (e.g., a pre-defined Y-th one), or determined according to the configuration of the network device.

In some scenarios, if the LP-WUS group is transmitted via frequency-division and occupies a time length of an LP-WUS only in the time domain, the first-type LP-WUR may only receive a part of the bandwidth corresponding to the LP-WUS group or an LP-WUS signal in an LP-WUS bandwidth, where the LP-WUS bandwidth is a bandwidth of an LP-WUS signal.

Optionally, the second-type LP-WUR may support receiving a plurality of LP-WUSs in the LP-WUS group for processing in combination, thereby increasing the data transmission performance of the LP-WUS and the coverage of the LP-WUS. For example, the second-type LP-WUR may always receive a plurality of LP-WUSs, or determine whether to receive an LP-WUS or a plurality of LP-WUSs according to auxiliary information (such as the coverage capability of the LP-WUS or the configuration information of the network device, etc.); and in a case of determining to receive a plurality of LP-WUSs, it may receive all LP-WUSs in the entire LP-WUS group, or part of the LP-WUSs in the LP-WUS group.

In some scenarios, if the LP-WUS group is transmitted via frequency-division, and only occupies a time length of an LP-WUS in the time domain, the second-type LP-WUR may receive the LP-WUS signals on the entire bandwidth corresponding to the LP-WUS group and process the received plurality of LP-WUSs in combination.

In some embodiments, for the terminal device with the first capability, it may receive the LP-WUS once, and for the terminal device with the second capability, it may receive the LP-WUS for multiple times and process the received LP-WUSs in combination.

In some embodiments, the receiving mode adopted by the terminal device may refer to a reception processing mode of the LP-WUR of the terminal device for the LP-WUS, where different receiving modes may correspond to different power consumption.

In some embodiments, the LP-WUR of the terminal device may support a plurality of receiving modes, for example, a first receiving mode and a second receiving mode, where power consumption of the first receiving mode is lower than power consumption of the second receiving mode.

For example, in the first receiving mode, the LP-WUR of the terminal device receives only an LP-WUS in the LP-WUS group, and in the second receiving mode, the LP-WUR of the terminal device receives a plurality of LP-WUSs in the LP-WUS group, and process the received LP-WUSs in combination.

In some embodiments, the LP-WUR of the terminal device with the second capability or the second type may support receiving a plurality of LP-WUSs, then the LP-WUR may support the first receiving mode and the second receiving mode, and the terminal device may determine whether to adopt the first receiving mode or the second receiving mode according to auxiliary information (such as the coverage capability of the LP-WUS or the configuration information of the network device, etc.).

In some embodiments, the terminal device may determine the receiving mode to be used based on at least one of the coverage capability of the LP-WUS, the configuration information of the network device, or a position of the terminal device. The configuration information of the network device may be used for configuring the receiving mode adopted by the terminal device to receive the LP-WUS.

In some specific embodiments, the terminal device may determine whether to adopt the first receiving mode or the second receiving mode, according to signal strength and a signal strength threshold of the LP-WUS.

For example, in a case where the signal strength of the first signal and the signal strength threshold meet a first preset condition, the first receiving mode is adopted, and in a case where the signal strength of the first signal and the signal strength threshold meet a second preset condition, the second receiving mode is adopted.

Optionally, in a case where the signal strength of the first signal and thee signal strength threshold meet a first preset condition, it can be considered that the coverage capability of the first signal is strong, or the coverage range of the first signal is large, or the terminal device is located in the central coverage area (that is, the distance between the terminal device and the network device is near). In this case, adopting the first receiving mode to receive the LP-WUS is conducive to reducing the power consumption of the terminal device.

In some embodiments, the signal strength of the first signal and the signal strength threshold meeting the first preset condition, may include:
the signal strength of the first signal being greater than the signal strength threshold; or
the signal strength of the first signal being greater than or equal to the signal strength threshold.

Optionally, in a case where the signal strength of the first signal and the signal strength threshold meet the second preset condition, it can be considered that the coverage capability of the first signal is weak, or the coverage range of the first signal is small, or the terminal device is located at the edge of the coverage area (that is, the distance between the terminal device and the network device is far). In this case, adopting the second receiving mode to receive the LP-WUS is conducive to improving the coverage range and transmission performance of the LP-WUS.

In some embodiments, the signal strength of the first signal and the signal strength threshold meeting the second preset condition, may include:
the signal strength of the first signal being less than or equal to the signal strength threshold; or
the signal strength of the first signal being less than the signal strength threshold.

Optionally, the signal strength threshold may be pre-defined or configured by the network device.

In other specific embodiments, in a case where the network device configures the terminal device to adopt the first receiving mode, the terminal device adopts the first receiving mode; and in a case where the network device configures the terminal device to adopt the second receiving mode, the terminal device adopts the second receiving mode.

In some embodiments of the present disclosure, the method 200 further includes:
determining, by the terminal device, a receiving mode of the first target signal according to first information;
where the first information includes at least one of:
   a capability of the terminal device, a receiving mode of the terminal device, a coverage capability of the first target signal, or configuration information of the network device.

In some embodiments, the configuration information of the network device may be used for configuring the receiving mode adopted by the terminal device to receive a second target signal. For example, the terminal device may be configured to receive a first signal or a plurality of first signals in the first target signal, and more specifically, the terminal device may be configured to receive which one of the first signals or which ones of the first signals in the first target signal.

In some specific embodiments, in a case where a first condition is met, the terminal device receives a first signal in the first target signal;
where the first condition includes at least one of:
that the terminal device is a terminal device with the first capability or the first type;
that the terminal device adopts the first receiving mode; or
that signal strength of the first signal and a signal strength threshold meet a first preset condition.

In other specific embodiments, in a case where a second condition is met, the terminal device receives a plurality of first signals in the first target signal;
where the second condition includes at least one of:
that the terminal device is a terminal device with the second capability or the second type;
that the terminal device adopts the second receiving mode; or
that signal strength of the first signal and a signal strength threshold meet a second preset condition.

In summary, the network device may transmit the wake up signal in the mode of an LP-WUS group, for example, by periodically transmitting the first target signal or transmitting the first target signal based on an event trigger, thereby improving the coverage performance and transmission performance of the wake up signal.

Correspondingly, the terminal device may adopt a suitable receiving mode to receive and process the LP-WUS, which is conducive to balancing the power consumption of the terminal device and the receiving performance of the LP-WUS.

Embodiment 2: transmitting the wake up signal based on a cascading mode of LP-WUS groups.

For example, a next level of LP-WUS group is obtained from an upper level of LP-WUS group.

In some embodiments of the present disclosure, the method 200 further includes:
Transmitting, by the network device, a second target signal, where the second target signal is obtained based on L first target signals, where L is a positive integer, for example, L=1, or L > 1.

In some embodiments, the first target signal may be considered to be a carrier signal of the second target signal, or in other words, an upper level of wake up signal.

For example, the network device modulates L first target signals to obtain a second target signal.

In some embodiments, information carried in the first target signal and information carried in the second target signal may be the same, or may be different.

For example, the first target signal is used for carrying wake up information for the terminal device, and the second target signal is used for carrying wake up information for a terminal group.

It should be understood that in the embodiments of the present disclosure, in a case where the network device transmits the wake up signal in a cascading mode, the first target signal and the second target signal may be any adjacent two levels of wake up signal among multiple levels of wake up signal, and for example, the first target signal may be the k-th level of wake up signal among the multiple levels of wake up signal, and the second target signal may be the k+1-th level of wake up signal among the multiple levels of wake up signal, where k=1,2,...,K-1, and K is the total number of levels.

In some embodiments, the second target signal being obtained from L first target signals, may include:
the second target signal being obtained based on a first target signal, as shown in (a) of FIG. 16. The distribution of K first signals in the first target signal may refer to the related description in Embodiment 1, which will not be repeated here for the sake of brevity.

Optionally, in this embodiment, the second target signal may include K second signals, and the distribution of the K second signals refers to the distribution of the K first signals in Embodiment 1, that is, the K second signals may be transmitted via time-division multiplexing and/or frequency-division multiplexing, and the specific implementation refers to the related description in Embodiment 1, which will not be repeated here for the sake of brevity.

In other embodiments, the second target signal being obtained from L first target signals, may include:
the second target signal being obtained based on a plurality of first target signals, as shown in (b) of FIG. 16.

It should be understood that (b) in FIG. 16 only takes the time-division multiplexing for the plurality of first target signals as an example, but the present disclosure is not limited thereto, and the plurality of first target signals may be transmitted via time-division multiplexing and/or frequency-division multiplexing, and the distribution of the plurality of first target signals may refer to the related description of the distribution of the K first signals in Embodiment 1, that is, by replacing the first signal in Embodiment 1 with the first target signal, the specific implementation of the distribution of the plurality of first target signals may be obtained, which will not be repeated here for the sake of brevity.

Optionally, in this embodiment, the second target signal may include K*L second signals, and the distribution of the K*L second signals refers to the distribution of the K first signals in Embodiment 1, that is, the K*L second signals may be transmitted via time-division multiplexing and/or frequency-division multiplexing, and the specific implementation refers to the related description in Embodiment 1, which will not be repeated here for the sake of brevity.

In a specific embodiment, L> 1, the L first target signals in the second target signal are transmitted via time-division multiplexing only, for example, by using the same frequency domain resources, or, the L first target signals are transmitted via frequency-division multiplexing only, then the L first target signals occupy a time length of a first target signal in the time domain.

In some embodiments, a modulating mode of the second target signal is different from a modulating mode of the first target signal.

For example, the first target signal is obtained by modulating P third target signals in a first modulating mode, and the second target signal is obtained by modulating L first target signals in a second modulating mode, where the third target signal is a carrier signal of the first target signal, the first modulating mode is different from the second modulating mode, and P is a positive integer.

Optionally, the complexity of the second modulating mode is lower than the complexity of the first modulating mode, that is, the complexity of receiving and processing the second target signal performed by the terminal device is lower than the complexity of receiving and processing the first target signal performed by the terminal device.

Optionally, the second modulating mode may be on-off keying (OOK), and the first modulating mode may be phase shift keying (PSK), amplitude shift keying (ASK) or frequency shift keying (FSK), etc.

In other embodiments, the modulating mode adopted by the second target signal is same as the modulating mode adopted by the first target signal, for example, both the OOK modulation adopted.

In some embodiments, a coding mode of the second target signal is different from or may be the same as a coding mode of the first target signal, for example, both the Manchester coding mode adopted.

In some embodiments, a symbol length of the second target signal is different from a symbol length of the first target signal.

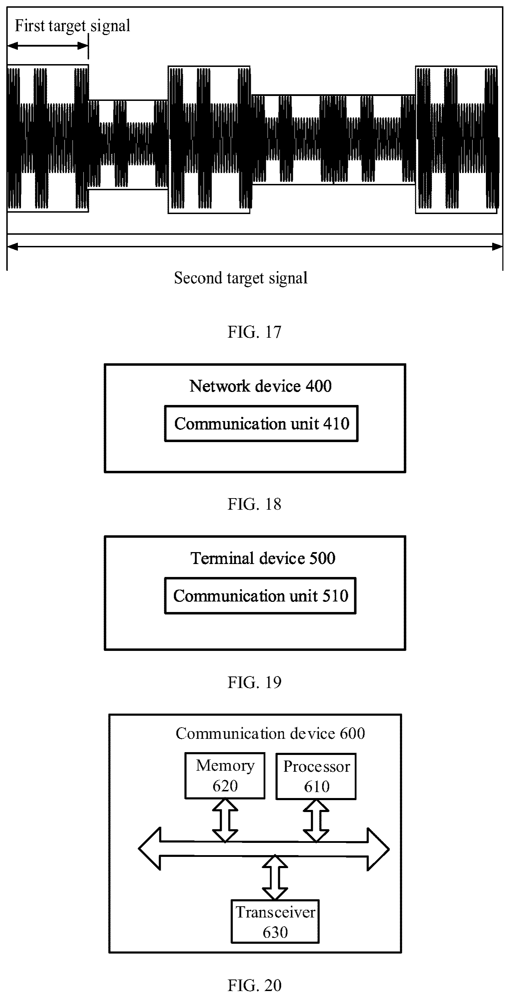

For example, the symbol length of the first target signal is smaller than the symbol length of the second target signal. As a specific example, a length of each symbol in the second target signal is equal to an integer multiple of a time length of the first target signal, as shown in FIG. 17.

In some embodiments of the present disclosure, the method 200 further includes:
determining, by the terminal device, a receiving mode of the second target signal according to second information;
where the second information includes at least one of:
   a capability of the terminal device, a receiving mode of the terminal device, a coverage capability of the second target signal, or configuration information of the network device.

In some embodiments, the configuration information of the network device may be used for configuring the receiving mode adopted by the terminal device to receive the second target signal. For example, the terminal device is configured to receive a second signal or a plurality of second signals in the second target signals, and more specifically, the terminal device may be configured to receive which one of the second signals or which ones of the second signals in the second target signals.

In some specific embodiments, in a case where a third condition is met, the terminal device receives a second signal in the second target signal;
where the third condition includes at least one of:
that the terminal device is a terminal device with the first capability or the first type;
that the terminal device adopts the first receiving mode; or
that signal strength of the second signal and a signal strength threshold meet a third preset condition.

In other specific embodiments, in a case where a fourth condition is met, the terminal device receives a plurality of second signals in the second target signal;
where the fourth condition includes at least one of:
that the terminal device is a terminal device with the second capability or the second type;
that the terminal device adopts the second receiving mode; or
that signal strength of the second signal and a signal strength threshold meet a fourth preset condition.

In some embodiments, the signal strength of the second signal and the signal strength threshold meeting the third preset condition, may include:
the signal strength of the second signal being greater than the signal strength threshold; or
the signal strength of the second signal being greater than or equal to the signal strength threshold.

In some embodiments, the signal strength of the second signal and the signal strength threshold meeting the fourth preset condition, may include:
the signal strength of the second signal being less than or equal to the signal strength threshold; or
the signal strength of the second signal being less than the signal strength threshold.

Optionally, the signal strength threshold may be pre-defined or configured by the network device, and the signal strength threshold may be the same as or may be different from the signal strength threshold in Embodiment 1.

In the scenarios of Embodiment 2, the terminal device may receive the second target signal only, or may receive both the first target signal and the second target signal, and for example, after demodulation, decoding and other processing on the second target signal are completed, further demodulation, decoding and other processing on the first target signal may be performed.

In some embodiments of the present disclosure, the method 200 further includes:
transmitting, by the network device, first configuration information to the terminal device, where the first configuration information is used by the terminal device to receive a target signal (or a wake up signal), and the target signal is used for waking up a main receiver of the terminal device.

In some embodiments, the target signal may include a first target signal and/or a second target signal.

In some embodiments, the first configuration information is used for configuring at least one of the following information:
a number of the K first signals, that is, a number of LP-WUSs in an LP-WUS group;
a number M of first signals frequency-division multiplexed in frequency domain among the K first signals;
a number N of transmission occasions of the K first signals in time domain, or in other words, a number N of LP-WUS durations occupied by the K first signals in the time domain;
a frequency domain interval between two adjacent first signals frequency-division multiplexed in frequency domain among the K first signals;
a time interval between two adjacent first signals time-division multiplexed in time domain among the K first signals;
a pattern of the K first signals;
a threshold for the terminal device to switch to a receiving mode;
spatial information corresponding to the K first signals; or
a number L of first target signals, based on which a second target signal is obtained.

It should be understood that the parameters configured in the first configuration information may be configured by one signalling, or may be configured by different signalling, may be dynamically configured, or may be semi-statically configured, for example, configured by an RRC signalling.

In some embodiments, the number M of first signals frequency-division multiplexed in the frequency domain among the K first signals and the number NN of LP-WUS durations occupied by the K first signals in the time domain may be used for determining the number of LP-WUSs in an LP-WUS group, for example, K = M*N.

In some embodiments, the threshold for the terminal device to switch to the receiving mode may include the signal quality threshold mentioned above.

In some embodiments, the spatial information corresponding to the K first signals (i.e., first target signal) may be used for indicating a quasi-co-located (QCL) relationship between the first target signal and the reference signal, which, for example, may be indicated by a transmission configuration indicator (TCI) state.

Optionally, the reference signal may be an existing signal or channel in the communication system, such as a channel state information reference signal (CSI-RS), a synchronization signal block (SSB), a physical downlink control channel (PDCCH), etc.

In some embodiments, the spatial information corresponding to the first target signal may include beam information corresponding to the first target signal.

In some embodiments, in a case where the first configuration information does not include the number K, the number K may be pre-defined.

In some embodiments, in a case where the first configuration information does not include the number M, the number M may be pre-defined.

In some embodiments, in a case where the first configuration information does not include the number N, the number N may be pre-defined.

In some embodiments, in a case where the first configuration information does not include the number L, the number L may be pre-defined.

In some embodiments, in a case where the first configuration information does not include the frequency domain interval between two adjacent first signals, the frequency domain interval may be pre-defined.

In some embodiments, in a case where the first configuration information does not include the time interval between two adjacent first signals, the time interval may be pre-defined.

In some embodiments, in a case where the first configuration information does not include the pattern of the K first signals, the pattern may be pre-defined.

In some embodiments, in a case where the first configuration information does not include the threshold for the terminal device to switch to the receiving mode, the threshold for the terminal device to switch to the receiving mode may be pre-defined.

In some embodiments, in a case where the first configuration information does not include the spatial information corresponding to the K first signals, the spatial information corresponding to the K first signals may be pre-defined, or determined according to a preset rule.

For example, the correspondence between the reference signal and the LP-WUS group on different time domain resources, frequency domain resources or code domain resources is pre-defined. In this way, the spatial information of the LP-WUS group may be determined by the time domain resources, frequency domain resources or code domain resources of the LP-WUS group.

In summary, a method for transmitting a wake up signal is provided in the embodiments of the present disclosure, where the network device may adopt a time-division mode and/or a frequency-division mode to transmit the wake up signal in units of LP-WUS group, or may adopt a cascading mode to transmit the wake up signal, which can adapt to the adaptions of terminal devices with various capabilities or types, as well as adapt to different receiving modes of terminal devices, thereby improving the coverage range and transmission performance of the wake up signal.

Correspondingly, the terminal device may determine the receiving mode of the LP-WUS according to at least one of a capability of the terminal device, a coverage capability of the LP-WUS, a receiving mode of the LP-WUR and configuration information of the network device.

For example, the LP-WUR of some terminals (such as terminals with the first capability) adopts a receiving and processing mode with a low level (lower power or lower complexity) to receive and process the LP-WUS, for example, to receive an LP-WUS only in the LP-WUS group, or receive the first target signal only; and some terminals (such as terminals with the second capability) adopt a receiving and processing mode with a high level (higher power or higher complexity) to receive and process the LP-WUS, for example, to receive a plurality of LP-WUSs in the LP-WUS group for processing in combination, or receive LP-WUSs in a plurality of LP-WUS groups among the cascaded LP-WUS groups.

For another example, the terminal device may determine whether to adopt a receiving and processing mode with a low level (lower power or lower complexity) or a receiving and processing mode with a high level (higher power or higher complexity) according to the coverage capability of the LP-WUS, to ensure the receiving performance of the LP-WUSs with different coverage capabilities.

The above, in combination with FIG. 6 to FIG. 17, describes in detail method embodiments of the present disclosure, and the following, in combination with FIG. 18 to FIG. 22, describes in detail apparatus embodiments of the present disclosure. It should be understood that the apparatus embodiments and the method embodiments correspond to each other, and similar descriptions may refer to the method embodiments.

FIG. 18 shows a schematic block diagram of a network device 400 according to the embodiments of the present disclosure. As shown in FIG. 18, the network device 400 includes:
a communication unit 410, configured to transmit a first target signal, where the first target signal includes K first signals, and the first signal is used for waking up a main receiver of a terminal device, or the first target signal is used for waking up a main receiver of a terminal device, and K is a positive integer.

In some embodiments, the K first signals are transmitted via time-division multiplexing (TDM) and/or frequency-division multiplexing (FDM).

In some embodiments, the K first signals are transmitted via time-division multiplexing (TDM) and/or frequency-division multiplexing (FDM).

In some embodiments, the K first signals are transmitted by using same frequency domain resources.

In some embodiments, there is a time interval between the K first signals in time domain.

In some embodiments, there is a third signal between the K first signals.

In some embodiments, the third signal is a synchronization signal.

In some embodiments, a bandwidth of the third signal is the same as a bandwidth of the first signal, or a bandwidth of the third signal is equal to a bandwidth of the K first signals.

In some embodiments, at least two first signals among the K first signals are transmitted by using different frequency domain resources.

In some embodiments, two adjacent first signals among the K first signals are transmitted by using different frequency domain resources.

In some embodiments, M first signals among the K first signals are transmitted on same time domain resources, and the M first signals are transmitted based on different frequency domain resources.

In some embodiments, the first target signal is transmitted periodically.

In some embodiments, transmission occasions of the first target signal are periodically distributed in time domain.

In some embodiments, time domain resources on which transmission occasions of the first target signal are located, are periodically distributed, where there are one or more transmission occasions of the first target signal on the time domain resources within a period.

In some embodiments, the first target signal is transmitted based on an event trigger.

In some embodiments, an event is used for triggering a transmission of the first target signal, or is used for triggering a plurality of transmissions of the first target signal.

In some embodiments, a transmission occasion of the first target signal is determined based on a reference signal.

In some embodiments, the transmission occasion of the first target signal is determined according to a time domain position of the reference signal and a first time interval.

In some embodiments, an interval between the transmission occasion of the first target signal and the time domain position of the reference signal is greater than or equal to the first time interval.

In some embodiments, the time domain position of the reference signal and the first time interval are used for determining a plurality of transmission occasions of the first target signal.

In some embodiments, the plurality of transmission occasions of the first target signal are periodically distributed.

In some embodiments, the communication number 410 is further configured to: transmit a second target signal, where the second target signal is obtained based on L said first target signals, where L is a positive integer, and the second target signal is used for waking up a main receiver of a terminal device.

In some embodiments, a modulating mode of the second target signal is different from a modulating mode of the first target signal; and/or
a coding mode of the second target signal is different from a coding mode of the first target signal; and/or
a symbol length of the second target signal is different from a symbol length of the first target signal.

In some embodiments, a length of each symbol in the second target signal is equal to an integer multiple of a time length of the first target signal.

In some embodiments, the communication number 410 is further configured to: transmit first configuration information to a terminal device, where the first configuration information is used for the terminal device to receive a target signal, and the target signal is used for waking up a main receiver of the terminal device.

In some embodiments, the first configuration information is used for configuring at least one of following information:
a number K of first signals in the first target signal;
a number M of first signals frequency-division multiplexed in frequency domain in the first target signal;
a number N of transmission occasions of the first target signal in time domain;
a frequency domain interval between two adjacent first signals frequency-division multiplexed in frequency domain in the first target signal;
a time interval between two adjacent first signals time-division multiplexed in time domain in the first target signal;
a pattern of the first target signal;
a threshold for the terminal device to switch to a receiving mode;
spatial information corresponding to the first target signal; or
a number L of first target signals, based on which a second target signal is obtained.

Optionally, in some embodiments, the communication unit mentioned above may be a communication interface or a transceiver, or may be an input/output interface of a communication chip or a system on chip. The processing unit mentioned above may be one or more processors.

It should be understood that the network device 400 according to the embodiments of the present disclosure may correspond to the network device in the method embodiments of the present disclosure, and the above-mentioned and other operations and/or functions of each unit in the network device 400 are respectively for implementing the corresponding procedures of the network device in the methods shown in FIG. 6 to FIG. 17, which will not be repeated here for the sake of brevity.

FIG. 19 shows a schematic block diagram of a terminal device 500 according to the embodiments of the present disclosure. As shown in FIG. 19, the terminal device 500 includes:
a communication unit 510, configured to receive part or all of signals in a first target signal transmitted from a network device, where the first target signal includes K first signals, and the first signal is used for waking up a main receiver of the terminal device, or the first target signal is used for waking up a main receiver of the terminal device, and K is a positive integer.

In some embodiments, the terminal device 500 further includes:
a processing unit, configured to determine a receiving mode of the first target signal according to first information;
where the first information includes at least one of:
   a capability of the terminal device, a receiving mode of the terminal device, a coverage capability of the first target signal, or configuration information of the network device.

In some embodiments, the receiving mode of the terminal device includes a first receiving mode and a second receiving mode, where in the first receiving mode, the terminal device receives a first signal in the first target signal only, and in the second receiving mode, the terminal device receives a plurality of first signals in the first target signal.

In some embodiments, the capability of the terminal device includes a first capability and a second capability; where power consumption of the terminal device with the first capability is lower than power consumption of the terminal device with the second capability; and/or the terminal device with the first capability supports receiving a first signal only, and the terminal device with the second capability supports receiving a plurality of first signals.

In some embodiments, the coverage capability of the first target signal includes signal strength of the first signal.

In some embodiments, the processing unit is specifically configured to:
in a case where a first condition is met, receive a first signal in the first target signal;
where the first condition includes at least one of:
   that the capability of the terminal device is a first capability;
   that the terminal device adopts a first receiving mode; or
   that signal strength of the first signal and a signal strength threshold meet a first preset condition.

In some embodiments, the processing unit is specifically configured to:
in a case where a second condition is met, receive a plurality of first signals in the first target signal;
where the second condition includes at least one of:
   that the capability of the terminal device is a second capability;
   that the terminal device adopts a second receiving mode; or
   that signal strength of the first signal and a signal strength threshold meet a second preset condition.

In some embodiments, the K first signals in the first target signal are transmitted via time-division multiplexing (TDM) and/or frequency-division multiplexing (FDM).

In some embodiments, the K first signals are transmitted by using same frequency domain resources.

In some embodiments, the K first signals are transmitted continuously in time domain.

In some embodiments, there is a time interval between the K first signals in time domain.

In some embodiments, there is a third signal between the K first signals.

In some embodiments, the third signal is a synchronization signal.

In some embodiments, a bandwidth of the third signal is the same as a bandwidth of the first signal, or a bandwidth of the third signal is equal to a bandwidth of the K first signals.

In some embodiments, at least two first signals among the K first signals are transmitted by using different frequency domain resources.

In some embodiments, two adjacent first signals among the K first signals are transmitted by using different frequency domain resources.

In some embodiments, M first signals among the K first signals are transmitted on same time domain resources, and the M first signals are transmitted based on different frequency domain resources.

In some embodiments, the first target signal is transmitted periodically.

In some embodiments, transmission occasions of the first target signal are periodically distributed in time domain.

In some embodiments, time domain resources on which the transmission occasions of the first target signal are located are periodically distributed, where one or more transmission occasions of the first target signal are periodically distributed on the time domain resources within a period.

In some embodiments, the first target signal is transmitted based on an event trigger.

In some embodiments, an event is used for triggering a transmission of the first target signal, or is used for triggering a plurality of transmissions of the first target signal.

In some embodiments, a transmission occasion of the first target signal is determined based on a reference signal.

In some embodiments, the transmission occasion of the first target signal is determined according to a time domain position of the reference signal and a first time interval.

In some embodiments, an interval between the transmission occasion of the first target signal and the time domain position of the reference signal is greater than or equal to the first time interval.

In some embodiments, the time domain position of the reference signal and the first time interval are used for determining a plurality of transmission occasions of the first target signal.

In some embodiments, the plurality of transmission occasions of the first target signal are periodically distributed.

In some embodiments, the communication unit 510 is further configured to: receive part or all of a second target signal transmitted from the network device, where the second target signal is obtained based on L said first target signals, L is a positive integer, and the second target signal is used for waking up the main receiver of the terminal device.

In some embodiments, a modulating mode of the second target signal is different from a modulating mode of the first target signal; and/or
a coding mode of the second target signal is different from a coding mode of the first target signal; and/or
a symbol length of the second target signal is different from a symbol length of the first target signal.

In some embodiments, a length of each symbol in the second target signal is equal to an integer multiple of a time length of the first target signal.

In some embodiments, the communication unit 510 is further configured to: receive first configuration information transmitted from the network device; and
the terminal device further includes: a processing unit, configured to receive a target signal according to the first configuration information, where the target signal is used for waking up the main receiver of the terminal device.

In some embodiments, the first configuration information is used for configuring at least one of following information:
a number K of first signals in the first target signal;
a number M of first signals frequency-division multiplexed in frequency domain in the first target signal;
a number N of transmission occasions of the first signals in the first target signal in time domain;
a frequency domain interval between two adjacent first signals frequency-division multiplexed in frequency domain in the first target signal;
a time interval between two adjacent first signals time-division multiplexed in time domain in the first target signal;
a pattern of the first target signal;
a threshold for the terminal device to switch to a receiving mode;
spatial information corresponding to the first target signal; or
a number L of first target signals, based on which a second target signal is obtained.

Optionally, in some embodiments, the communication unit mentioned above may be a communication interface or a transceiver, or may be an input/output interface of a communication chip or a system on chip. The processing unit mentioned above may be one or more processors.

It should be understood that the terminal device 500 according to the embodiments of the present disclosure may correspond to the terminal device in the method embodiments of the present disclosure, and the above-mentioned and other operations and/or functions of each unit in the terminal device 500 are respectively for implementing the corresponding procedures of the terminal device in the methods shown in FIG. 6 to FIG. 17, which will not be repeated here for the sake of brevity.

FIG. 20 is a schematic structural diagram of a communication device 600 provided in the embodiments of the present disclosure. The communication device 600 shown in FIG. 20 includes a processor 610, and the processor 610 may call and run a computer program from a memory to implement the method in the embodiments of the present disclosure.

Optionally, as shown in FIG. 20, the communication device 600 may further include a memory 620. The processor 610 may call and run a computer program from the memory 620, to implement the method in the embodiments of the present disclosure.

The memory 620 may be a separate device independent from the processor 610, or may be integrated into the processor 610.

Optionally, as shown in FIG. 20, the communication device 600 may further include a transceiver 630. The processor 610 may control the transceiver 630 to communicate with other devices, and specifically, to transmit information or data to other devices, or receive information or data transmitted by other devices.

The transceiver 630 may include a transmitter and a receiver. The transceiver 630 may further include an antenna (antennas), and the number of antennas may be one or more.

Optionally, the communication device 600 may specifically be the network device of the embodiments of the present disclosure, and the communication device 600 may implement corresponding procedures implemented by the network device in the various methods of the embodiments of the present disclosure, which will not be repeated here for the sake of brevity.

Optionally, the communication device 600 may specifically be the terminal device of the embodiments of the present disclosure, and the communication device 600 may implement the corresponding procedures implemented by the terminal device in the various methods of the embodiments of the present disclosure, which will not be repeated here for the sake of brevity.

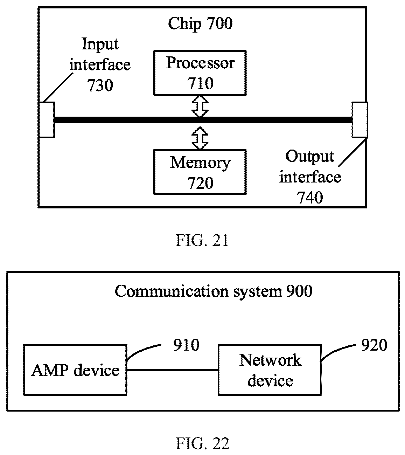

FIG. 21 is a schematic structural diagram of a chip in the embodiments of the present disclosure. The chip 700 shown in FIG. 21 includes a processor 710, the processor 710 may call and run a computer program from a memory to implement the method in the embodiments of the present disclosure.

Optionally, as shown in FIG. 21, the chip 700 may further include a memory 720. The processor 710 may call and run a computer program from the memory 720 to implement the method in the embodiments of the present disclosure.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, to acquire information or data transmitted by other devices or chips.

Optionally, the chip 700 may further include an output interface 740. The processor 710 may control the output interface 740 to communicate with other devices or chips, and specifically, to output information or data to other devices or chips.

Optionally, the chip may be applied to the network device in the embodiments of the present disclosure, and the chip may implement the corresponding procedures implemented by the network device in the various methods of the embodiments of the present disclosure, which will not be repeated here for the sake of brevity.

Optionally, the chip may be applied to the terminal device in the embodiments of the present disclosure, and the chip may implement the corresponding procedures implemented by the terminal device in the various methods of the embodiments of the present disclosure, which will not be repeated here for the sake of brevity.

It should be understood that the chip mentioned in the embodiments of the present disclosure may also be called a system on chip, a system chip, a chip system or a system-on-chip chip, etc.

FIG. 22 is a schematic block diagram of a communication system 900 provided in the embodiments of the present disclosure. As shown in FIG. 22, the communication system 900 includes a terminal device 910 and a network device 920.

The terminal device 910 may be used to implement the corresponding functions implemented by the terminal device in the above method, and the network device 920 may be used to implement the corresponding functions implemented by the network device in the above method, which will not be repeated here for the sake of brevity.

It should be understood that the processor in the embodiments of the present disclosure may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present disclosure may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

The embodiments of the present disclosure further provide a computer-readable storage medium for storing a computer program.

Optionally, the computer-readable storage medium may be applied to the network device in the embodiments of the present disclosure, and the computer program causes a computer to perform the corresponding procedure implemented by the network device in the various methods of the embodiments of the present disclosure, which will not be repeated here for the sake of brevity.

Optionally, the computer-readable storage medium may be applied to the terminal device in the embodiments of the present disclosure, and the computer program causes a computer to perform the corresponding procedure implemented by the terminal device in various methods of the embodiments of the present disclosure, which will not be repeated here for the sake of brevity.

The embodiments of the present disclosure further provide a computer program product including computer program instructions.

Optionally, the computer program product may be applied to the network device in the embodiments of the present disclosure, and the computer program instructions cause a computer to perform the corresponding procedure implemented by the network device in the various methods of the embodiments of the present disclosure, which will not be repeated here for the sake of brevity.

Optionally, the computer program product may be applied to the terminal device in the embodiments of the present disclosure, and the computer program instruction causes a computer to perform the corresponding procedure implemented by the terminal device in various methods of the embodiments of the present disclosure, which will not be repeated here for the sake of brevity.

The embodiments of the present disclosure further provide a computer program.

Optionally, the computer program may be applied to the network device in the embodiments of the present disclosure, the computer program when being executed on a computer, causes the computer to perform the corresponding procedure implemented by the network device in various methods of the embodiments of the present disclosure, which will not be repeated here for the sake of brevity.

Optionally, the computer program may be applied to the terminal device in the embodiments of the present disclosure, the computer program when being executed on a computer, causes the computer to perform the corresponding procedure implemented by the terminal device in various methods of the embodiments of the present disclosure, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the present disclosure, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in the form of a software functional unit and sold or used as an independent product, they may be stored in a computer-readable storage medium. Based on this understanding, the technical solutions of the present disclosure essentially, or a part of the technical solutions that contributes to the prior art, or a part of the technical solutions, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of the claims.

## Claims

**1.** A wireless communication method, comprising:
transmitting, by a network device, a first target signal, wherein the first target signal comprises K first signals, and the first signal is used for waking up a main receiver of a terminal device, or the first target signal is used for waking up a main receiver of a terminal device, and K is a positive integer.

**2.** The method according to claim 1, wherein the K first signals are transmitted via time-division multiplexing (TDM) and/or frequency-division multiplexing (FDM).

**3.** The method according to claim 2, wherein the K first signals are transmitted by using same frequency domain resources.

**4.** The method according to claim 3, wherein the K first signals are transmitted continuously in time domain.

**5.** The method according to claim 3, wherein there is a time interval between the K first signals in time domain.

**6.** The method according to claim 3 or 5, wherein there is a third signal between the K first signals.

**7.** The method according to claim 6, wherein the third signal is a synchronization signal.

**8.** The method according to claim 6 or 7, wherein a bandwidth of the third signal is same as a bandwidth of the first signal, or a bandwidth of the third signal is equal to a bandwidth of the K first signals.

**9.** The method according to claim 1 or 2, wherein at least two first signals among the K first signals are transmitted by using different frequency domain resources.

**10.** The method according to claim 9, wherein two adjacent first signals among the K first signals are transmitted by using different frequency domain resources.

**11.** The method according to claim 9, wherein M first signals among the K first signals are transmitted on same time domain resources, and the M first signals are transmitted based on different frequency domain resources.

**12.** The method according to any one of claims 1 to 11, wherein the first target signal is transmitted periodically.

**13.** The method according to claim 12, wherein transmission occasions of the first target signal are periodically distributed in time domain.

**14.** The method according to claim 12, wherein time domain resources on which transmission occasions of the first target signal are located, are periodically distributed, wherein there are one or more transmission occasions of the first target signal on the time domain resources within a period.

**27.** A wireless communication method, comprising:
receiving, by a terminal device, part or all of signals in a first target signal transmitted from a network device, wherein the first target signal comprises K first signals, and the first signal is used for waking up a main receiver of the terminal device, or the first target signal is used for waking up a main receiver of the terminal device, and K is a positive integer.

**28.** The method according to claim 27, wherein the method further comprises:
determining, by the terminal device, a receiving mode of the first target signal according to first information;
wherein the first information comprises at least one of:
a capability of the terminal device, a receiving mode of the terminal device, a coverage capability of the first target signal, or configuration information of the network device.

**29.** The method according to claim 28, wherein the receiving mode of the terminal device comprises a first receiving mode and a second receiving mode, wherein in the first receiving mode, the terminal device receives a first signal in the first target signal only, and in the second receiving mode, the terminal device receives a plurality of first signals in the first target signal.

**30.** The method according to claim 28 or 29, wherein the capability of the terminal device comprises a first capability and a second capability; wherein power consumption of the terminal device with the first capability is lower than power consumption of the terminal device with the second capability; and/or the terminal device with the first capability supports receiving a first signal only, and the terminal device with the second capability supports receiving a plurality of first signals.

**31.** The method according to any one of claims 28 to 30, wherein the coverage capability of the first target signal comprises signal strength of the first signal.

**32.** The method according to any one of claims 28 to 31, wherein determining, by the terminal device, the receiving mode of the first target signal according to the first information, comprises:
in a case where a first condition is met, receiving a first signal in the first target signal;
wherein the first condition comprises at least one of:
that the capability of the terminal device is a first capability;
that the terminal device adopts a first receiving mode; or
that signal strength of the first signal and a signal strength threshold meet a first preset condition.

**33.** The method according to any one of claims 28 to 32, wherein determining, by the terminal device, the receiving mode of the first target signal according to the first information, comprises:
in a case where a second condition is met, receiving a plurality of first signals in the first target signal;
wherein the second condition comprises at least one of:
that the capability of the terminal device is a second capability;
that the terminal device adopts a second receiving mode; or
that signal strength of the first signal and a signal strength threshold meet a second preset condition.

**34.** The method according to any one of claims 27 to 33, wherein the K first signals in the first target signal are transmitted via time-division multiplexing (TDM) and/or frequency-division multiplexing (FDM).

**35.** The method according to claim 34, wherein the K first signals are transmitted by using same frequency domain resources.

**36.** The method according to claim 35, wherein the K first signals are transmitted continuously in time domain.

**37.** The method according to claim 35, wherein there is a time interval between the K first signals in time domain.

**38.** The method according to claim 35 or 37, wherein there is a third signal between the K first signals.

**39.** The method according to claim 38, wherein the third signal is a synchronization signal.

**40.** The method according to claim 38 or 39, wherein a bandwidth of the third signal is same as a bandwidth of the first signal, or a bandwidth of the third signal is equal to a bandwidth of the K first signals.

**41.** The method according to any one of claims 27 to 34, wherein at least two first signals among the K first signals are transmitted by using different frequency domain resources.

**42.** The method according to claim 41, wherein two adjacent first signals among the K first signals are transmitted by using different frequency domain resources.

**43.** The method according to claim 41, wherein M first signals among the K first signals are transmitted on same time domain resources, and the M first signals are transmitted based on different frequency domain resources.

**44.** The method according to any one of claims 27 to 43, wherein the first target signal is transmitted periodically.

**45.** The method according to claim 44, wherein transmission occasions of the first target signal are periodically distributed in time domain.

**46.** The method according to claim 45, wherein time domain resources on which the transmission occasions of the first target signal are located are periodically distributed, wherein one or more transmission occasions of the first target signal are periodically distributed on the time domain resources within a period.

**47.** The method according to any one of claims 27 to 43, wherein the first target signal is transmitted based on an event trigger.

**48.** The method according to claim 47, wherein an event is used for triggering a transmission of the first target signal, or is used for triggering a plurality of transmissions of the first target signal.

**49.** The method according to any one of claims 27 to 43, wherein a transmission occasion of the first target signal is determined based on a reference signal.

**50.** The method according to claim 49, wherein the transmission occasion of the first target signal is determined according to a time domain position of the reference signal and a first time interval.

**51.** The method according to claim 50, wherein an interval between the transmission occasion of the first target signal and the time domain position of the reference signal is greater than or equal to the first time interval.

**52.** The method according to claim 50, wherein the time domain position of the reference signal and the first time interval are used for determining a plurality of transmission occasions of the first target signal.

**53.** The method according to claim 52, wherein the plurality of transmission occasions of the first target signal are periodically distributed.

**54.** The method according to any one of claims 27 to 53, wherein the method further comprises:
receiving, by the terminal device, part or all of a second target signal transmitted from the network device, wherein the second target signal is obtained based on L said first target signals, L is a positive integer, and the second target signal is used for waking up the main receiver of the terminal device.

**55.** The method according to claim 54, wherein
a modulating mode of the second target signal is different from a modulating mode of the first target signal; and/or
a coding mode of the second target signal is different from a coding mode of the first target signal; and/or
a symbol length of the second target signal is different from a symbol length of the first target signal.

**56.** The method according to claim 54 or 55, wherein a length of each symbol in the second target signal is equal to an integer multiple of a time length of the first target signal.

**57.** The method according to any one of claims 27 to 56, wherein the method further comprises:
receiving, by the terminal device, first configuration information transmitted from the network device; and
receiving a target signal according to the first configuration information, wherein the target signal is used for waking up the main receiver of the terminal device.

**58.** The method according to claim 57, wherein the first configuration information is used for configuring at least one of following information:
a number K of first signals in the first target signal;
a number M of first signals frequency-division multiplexed in frequency domain in the first target signal;
a number N of transmission occasions of the first signals in the first target signal in time domain;
a frequency domain interval between two adjacent first signals frequency-division multiplexed in frequency domain in the first target signal;
a time interval between two adjacent first signals time-division multiplexed in time domain in the first target signal;
a pattern of the first target signal;
a threshold for the terminal device to switch to a receiving mode;
spatial information corresponding to the first target signal; or
a number L of first target signals, based on which a second target signal is obtained.

**59.** A network device, comprising:
a communication unit, configured to transmit a first target signal, wherein the first target signal comprises K first signals, and the first signal is used for waking up a main receiver of a terminal device, or the first target signal is used for waking up a main receiver of a terminal device, and K is a positive integer.

**60.** A terminal device, comprising:
a communication unit, configured to receive part or all of signals in a first target signal transmitted from a network device, wherein the first target signal comprises K first signals, and the first signal is used for waking up a main receiver of the terminal device, or the first target signal is used for waking up a main receiver of the terminal device, and K is a positive integer.

**61.** A network device, comprising: a processor and a memory, wherein the memory is configured to store a computer program, and the processor is configured to call and run the computer program stored in the memory to perform the method according to any one of claims 1 to 26.

**62.** A terminal device, comprising: a processor and a memory, wherein the memory is configured to store a computer program, and the processor is configured to call and run the computer program stored in the memory to perform the method according to any one of claims 27 to 58.

**63.** A chip, comprising: a processor, configured to call and run a computer program from a memory, to enable a device equipped with the chip to perform the method according to any one of claims 1 to 26, or the method according to any one of claims 27 to 58.

**64.** A computer-readable storage medium, configured to store a computer program, wherein the computer program enables a computer to perform the method according to any one of claims 1 to 26, or the method according to any one of claims 27 to 58.

**65.** A computer program product, comprising computer program instructions, wherein the computer program instructions enable a computer to perform the method according to any one of claims 1 to 26, or the method according to any one of claims 27 to 58.

**66.** A computer program, wherein the computer program enables a computer to perform the method according to any one of claims 1 to 26, or the method according to any one of claims 27 to 58.
